# EUROPEAN PATENT APPLICATION

(11) **EP 4 455 404 A1**
(43) Date of publication of application: **30.10.2024**
(21) Application number: 22910514.3
(22) Date of filing: 04.10.2022
(51) Int. Cl.: E01H 5/00, G08G 1/09, G08G 1/16

(54) **INFORMATION-PROCESSING DEVICE, TERMINAL, INFORMATION-PROCESSING METHOD, ALARM METHOD, AND ALARM SYSTEM**

(30) Priority: 23.12.2021 JP 2021209645
(71) Applicant: Panasonic Intellectual Property Management Co., Ltd., Kadoma-shi, Osaka 571-0057 (JP)
(72) Inventor: YAMAZAKI, Yasuhisa, Osaka 571-0057 (JP); SHIBATA, Jun, Osaka 571-0057 (JP); YOSHINO, Kazuyuki, Osaka 571-0057 (JP); HORIIKE, Naoto, Osaka 571-0057 (JP); KAWAI, Yoshihito, Osaka 571-0057 (JP); SHIROSAKI, Yoshimasa, Osaka 571-0057 (JP); TSUNOBUCHI, Atsuki, Osaka 571-0057 (JP); GEJOH, Noriyuki, Osaka 571-0057 (JP); SUDO, Hiroaki, Osaka 571-0057 (JP); KOSAKA, Kazuhiro, Osaka 571-0057 (JP)
(74) Representative: Eisenführ Speiser
(86) International application number: PCT/JP2022/037129
(87) International publication number: WO 2023/119788

(57) **Abstract**

Provided is an information-processing device in a system in which each of a plurality of moving bodies travels on each of a plurality of substantially parallel travel routes, the information-processing device comprising: a processing unit that, on the basis of the positions of terminals installed in the moving bodies, determines whether or not the distance between the terminals mounted on the moving bodies traveling on adjacent routes is within a specific distance range, and generates an alarm-issuing signal for issuing an alarm upon determining that the distance is outside of the specific distance range; and a communication unit that transmits the alarm-issuing signal to a management terminal that manages the traveling of the moving bodies.

## Description

### Technical Field

The present disclosure relates to an information processing apparatus, a terminal, an information processing method, an alarm method, and an alarm system.

### Background Art

As systems for removing a foreign object such as snow, snow removal operation management systems that manage the amount of operation by managing actual operation routes, operation distances, and operation time are known.

PTL 1, for example, describes a snow removal operation management system including a plurality of snow removal operation machines and a management server that manages snow removal information transmitted from the snow removal operation machines. The snow removal operation machines detect current positions and snow removal operation states thereof, create snow removal operation information from detected positional information and information regarding the snow removal operation states, and transmit the created snow removal operation information to the management server. The management server creates snow removal operation progress information from the snow removal operation information transmitted from the snow removal operation machines. As a result, the snow removal operation management system manages snow removal in real-time.

In snow removal operations during these years in airports and other large places, a plurality of snowplows promptly removes snow in formation without leaving any snow behind in order not to hinder aircraft operations. Snow removal workers achieve prompt snow removal without leaving any snow behind by driving snowplows while maintaining certain intervals in the formation.

### Citation List

### Patent Literature

PTL 1
Japanese Patent Application Laid-Open No.2005-36477

### Summary of Invention

It requires experience, however, to drive a snowplow or the like while maintaining a certain interval in formation.

Non-limiting embodiments of the present disclosure contribute to providing an information processing apparatus, a terminal, an information processing method, an alarm method, and an alarm system capable of giving alarms such that even workers with little experience can appropriately perform an operation.

An information processing apparatus according to one example of the present disclosure is an apparatus in a system where each of a plurality of mobile objects travels along a corresponding one of a plurality of substantially parallel travel routes, the information processing apparatus including: a processor that determines, based on positions of terminals mounted on the mobile objects, whether a distance between terminals mounted on mobile objects traveling along adjacent travel routes is within a certain distance range and that, when determining that the distance is outside the certain distance range, generates an alarm output signal for outputting an alarm; and a communicator that transmits the alarm output signal to a management terminal that manages travel of the mobile objects.

A terminal according to one example of the present disclosure is a terminal mounted on each of a plurality of mobile objects in a system where the mobile object travels along a corresponding one of a plurality of substantially parallel travel routes, the terminal including: a processor that determines a position of the terminal; and an alarm that outputs an alarm when a distance between the position of the terminal and a position of another terminal mounted on another mobile object traveling along a travel route adjacent to the travel route along which the mobile object on which the terminal is mounted travels is outside a certain distance range.

An information processing method according to one example of the present disclosure is a method for an information processing apparatus in a system where each of a plurality of mobile objects travels along a corresponding one of substantially parallel travel routes, the information processing method including: determining, by the information processing apparatus, based on positions of terminals mounted on the mobile objects, whether a distance between terminals mounted on mobile objects traveling along adjacent travel routes is within a certain distance range; generating, by the information processing apparatus, when determining that the distance is outside the certain distance range, an alarm output signal for outputting an alarm; and transmitting, by the information processing apparatus, the alarm output signal to a management terminal that manages the travel of the mobile objects.

An alarm method according to one example of the present disclosure is a method for a terminal mounted on each of a plurality of mobile objects in a system where the mobile object travels along a corresponding one of a plurality of substantially parallel travel routes, the alarm method including: determining, by the terminal, a position of the terminal; and outputting, by the terminal, an alarm when a distance between the position of the terminal and a position of another terminal mounted on another mobile object traveling along a travel route adjacent to the travel route along which the mobile object on which the terminal is mounted travels is outside a certain distance range.

An alarm system according to one example of the present disclosure includes: a first terminal mounted on a first mobile object; a second terminal mounted on a second mobile object that travels along a travel route substantially parallel to and adjacent to a travel route along which the first mobile object travels; and a management terminal that manages travel of the first mobile object and the second mobile object, in which the alarm system determines, based on positions of the first terminal and the second terminal, whether a distance between the first terminal and the second terminal is within a certain distance range and, when determining that the distance is outside the certain distance range, generates an alarm output signal for outputting an alarm and transmits the alarm output signal to the management terminal, and in which the management terminal outputs the alarm in accordance with the alarm output signal.

Note that these generic or specific aspects may be achieved by a system, an apparatus, a method, an integrated circuit, a computer program, or a recoding medium, and also by any combination of the system, the apparatus, the method, the integrated circuit, the computer program, and the recoding medium.

According to an embodiment of the present disclosure, whether a distance between terminals mounted on mobile objects traveling along adjacent travel routes is within a certain distance range is determined on the basis of positions of the terminals mounted on the mobile objects. When the distance is outside the certain distance range (e.g., the distance is too small or too large), an alarm output signal for causing a management terminal to output an alarm is generated and transmitted to the management terminal, or the terminals output an alarm. As a result, collision between the mobile objects can be avoided, or efficiency of an operation can be increased by avoiding a delay in the entirety of the operation due to the mobile objects becoming too far from each other. Alarms, therefore, can be given such that even workers with little experience can appropriately perform the operation.

Additional benefits and advantages of the disclosed exemplary embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an example of an alarm system according to Embodiment 1 of the present disclosure;
FIG. 2 is a diagram illustrating an example of configuration of a positioning terminal according to Embodiment 1;
FIG. 3 is a diagram illustrating an example of configuration of a host server according to Embodiment 1;
FIG. 4 is a diagram illustrating an example of operation of the positioning terminal according to Embodiment 1;
FIG. 5 is a diagram illustrating an example of operation of the host server according to Embodiment 1;
FIG. 6A is a diagram illustrating another example of the operation of the host server according to Embodiment 1;
FIG. 6B is another diagram illustrating the other example of the operation of the host server according to Embodiment 1;
FIG. 7 is a diagram illustrating an example of an alarm system according to Embodiment 2 of the present disclosure;
FIG. 8 is a diagram illustrating an example of configuration of a positioning terminal according to Embodiment 2;
FIG. 9 is a diagram illustrating an example of configuration of a host server according to Embodiment 2;
FIG. 10 is a diagram illustrating an example of operation of the positioning terminal according to Embodiment 2;
FIG. 11A is a diagram illustrating another example of the operation of the host server according to Embodiment 2;
FIG. 11B is another diagram illustrating the other example of the operation of the host server according to Embodiment 2;
FIG. 12 is a diagram illustrating an example of a snow removal area, order (positional relationship) of snowplows, and travel routes of the snowplows according to embodiments of the present disclosure; and
FIG. 13 is a diagram illustrating an example of a determination of order (positional relationship) and travel routes of snowplows according to Embodiment 3 of the present disclosure.

### Description of Embodiments

Hereinafter, an embodiment of the present disclosure will be described in detail with reference to the accompanying drawings as appropriate. Having said that, a detailed description more than necessary may be omitted, such as a detailed description of an already well-known matter and a duplicated description for a substantially identical configuration, to avoid the following description becoming unnecessarily redundant and to facilitate understanding by those skilled in the art.

Note that, the accompanying drawings and the following description are provided for those skilled in the art to sufficiently understand the present disclosure, and are not intended to limit the subject matter described in the claims.

### (Embodiment 1)

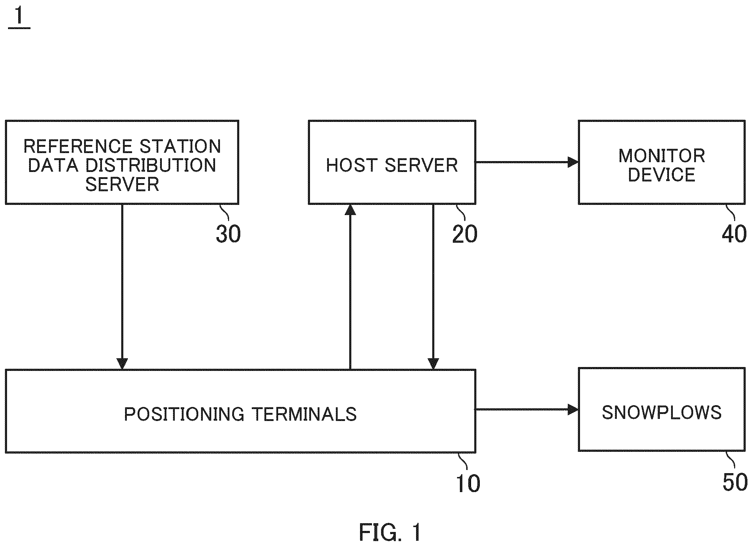

FIG. 1 is a diagram illustrating an example of alarm system 1 according to Embodiment 1 of the present disclosure. In an example of a scenario where alarm system 1 is used, alarms (notifications) for assisting workers who drive snowplows for removing snow in a V-shaped formation are given in a snow removal operation at an airport or another large area. An area where a snow removal operation is to be performed will be referred to as a snow removal area (an example of a geofence) hereinafter, and such a scenario will be taken as an example. The snow removal area is an example of a foreign object removal area in the present disclosure.

As illustrated in FIG. 1, alarm system 1 includes a plurality of positioning terminals 10, host server 20, reference station data distribution server 30, monitor device 40, and a plurality of snowplows 50. Alarm system 1 may also be referred to as an information processing system, a notification system, an alarm system, or the like.

Each positioning terminal 10 may be mounted on one of snowplows 50 and associated with snowplow 50 (and one of workers who drive snowplows 50 as necessary), for example, as a dedicated terminal for positioning or a wireless terminal having a positioning function, such as a personal computer, a server computer, a smartphone, or a tablet. Positioning terminals 10 may also be referred to as notification apparatuses, alarm apparatuses, or the like. Positioning terminal 10 is an example of a first terminal, a second terminal, a terminal, a different (another) terminal, or an information processing apparatus (corresponds to representative positioning terminal 10, which will be described later) in the present disclosure.

Positioning terminal 10 may access a network including a mobile communication network using a communication method such as LTE (long-term evolution), 5G, Beyond 5G, 6G, Wi-Fi (registered trademark), WiGig (registered trademark), WiMAX (registered trademark), or the like and connect to host server 20 and reference station data distribution server 30 over the network.

Positioning terminal 10 receives radio waves (may also be referred to as a "satellite signal" or a "positioning signal") transmitted from a GNSS (global navigation satellite system) satellite (not illustrated)) and generates positioning data regarding positioning terminal 10 (may also be referred to as "positioning terminal positioning data" or "positioning terminal data") using the received satellite signal. Positioning terminal 10 receives, from reference station data distribution server 30, correction data for performing RTK (real-time kinematic) processing and measuring a position thereof (positioning of positioning terminal 10).

Positioning terminal 10 measures the position thereof (also velocity and acceleration thereof depending on the case) by performing RTK processing using the positioning terminal positioning data and the correction data. The position may also be referred to as coordinates (on Earth). The coordinates may be, for example, three-dimensional coordinates including latitude, longitude, and altitude or two-dimensional coordinates represented by two of latitude, longitude, and altitude (e.g., latitude and longitude). It is assumed in the following description that coordinates are two-dimensional coordinates represented by latitude and longitude. An expression "measure a position" may be replaced by "determine a position (or coordinates)", "obtain a position (or coordinates)", "estimate a position (or coordinates)", "detect a position (or coordinates)", "calculate a position (or coordinates)", "derive a position (or coordinates)", or "find a position (or coordinates)". Details of the positioning based on RTK processing will be described later. Accurate positional information or the like can thus be obtained through RTK processing.

Positioning terminal 10 transmits a positioning result obtained as a result of the positioning to host server 20. When positioning terminal 10 satisfies a certain condition (when an "alarm event" occurs), positioning terminal 10 receives, from host server 20, an alarm output instruction for outputting an alarm. In addition, when positioning terminal 10 satisfies another certain condition (when an "alarm cancellation event" occurs), positioning terminal 10 receives, from host server 20, an alarm output cancellation instruction for cancelling output of an alarm. The alarm output instruction may be expressed as a (alarm output) signal for causing positioning terminal 10 to output an alarm (for urging the worker to correct a position of snowplow 50). The alarm output cancellation instruction may be expressed as a (alarm output cancellation) signal for causing positioning terminal 10 to cancel output of an alarm. Alternatively, the alarm output cancellation instruction may be expressed as a (alarm output cancellation) signal indicating that positioning terminal 10 that deviated from a travel route by a certain distance (threshold) or longer has returned within the certain distance (threshold). Alternatively, the alarm output cancellation instruction may be expressed as a (alarm output cancellation) signal indicating that a distance between the position of positioning terminal 10 and a position of another positioning terminal 10 has fallen within a certain distance range again. Alternatively, the alarm output cancellation instruction may be expressed as a (alarm output cancellation) signal indicating that a snow removal operation has ended. Examples of the alarm event and the alarm cancellation event will be described later.

Positioning terminal 10 outputs an alarm for, for example, the worker who is driving snowplow 50 associated therewith in accordance with an alarm output instruction. In addition, positioning terminal 10 cancels output of an alarm in accordance with an alarm output cancellation instruction.

Positioning terminal 10 may receive a vehicle operation instruction (a velocity instruction, an acceleration instruction, a steering operation instruction, etc.) from host server 20 along with, or separately from, an alarm output instruction so that snowplow 50 automatically travels along a travel route or within an allowable distance from the travel route and within an allowable distance range from another snowplows 50 ahead. Positioning terminal 10 may then transmit the received vehicle operation instruction to (a vehicle control system (a vehicle driving system or the like) of) snowplow 50. The vehicle operation instruction may also be referred to as a vehicle operation signal.

Host server 20 may be, for example, one or more server computers. Host server 20 may also be referred to as a cloud server. Host server 20 is an example of the information processing apparatus in the present disclosure.

Host server 20 sets a snow removal area (e.g., a runway or part thereof) in advance. Host server 20 also sets in advance a travel route along which the above-described snowplow 50 travels, an allowable distance within which snowplow 50 may deviate from the travel route, and an allowable distance range between snowplow 50 and another snowplow 50 ahead. In the present embodiment, the snow removal area may have a rectangular shape, the travel route may be a straight line segment, and a plurality of travel routes along which the plurality of snowplows 50 travels may be parallel, or substantially parallel, to one another. The shape of the snow removal area and the travel route, however, are not limited to a rectangle and a straight line segment, respectively.

Host server 20 receives a positioning result transmitted from positioning terminal 10. Host server 20 determines, on the basis of the set snow removal area, travel route, allowable distance, and allowable distance range, the received positioning result, and the like, whether to cause positioning terminal 10 to output an alarm or whether to cause positioning terminal 10 to cancel output of an alarm (i.e., detects an alarm event and an alarm cancellation event). When detecting an alarm event, host server 20 generates an alarm output instruction for notifying the worker who is driving snowplow 50 of occurrence of the alarm event and transmits the alarm output instruction to positioning terminal 10. When detecting an alarm cancellation event, host server 20 generates an alarm output cancellation instruction for notifying the worker who is driving snowplow 50 of occurrence of the alarm cancellation event and transmits the alarm output cancellation instruction to positioning terminal 10. Host server 20 may also transmit a vehicle operation instruction (a velocity instruction, an acceleration instruction, a steering operation instruction, etc.) to (the vehicle control system (the vehicle driving system) of) snowplow 50 through positioning terminal 10 along with, or separately from, an alarm output instruction so that snowplow 50 automatically travels along the travel route or within the allowable range from the travel route and within the allowable distance range from another snowplow 50 ahead.

Host server 20 may manage the plurality of positioning terminals 10 by associating identification information regarding positioning terminals 10 with identification information regarding snowplows 50 in a table format or a list format, for example, and storing a table or a list in a storage device included in host server 20.

Host server 20 transmits, to monitor device 40, the set snow removal area, travel route, allowable distance, and allowable distance range, the received positioning result, positioning terminal 10 and another positioning terminal 10 to which an alarm output instruction is to be transmitted so that these pieces of information are displayed.

Reference station data distribution server 30 transmits, to positioning terminal 10, correction data for performing RTK processing and measuring a position of positioning terminal 10. The correction data may be generated by a reference station (not illustrated) and transmitted to reference station data distribution server 30. The reference station may generate positioning data regarding the reference station (may also be referred to as "correction data", "reference station positioning data", or "reference station data") on the basis of a satellite signal transmitted from a GNSS satellite. The reference station may periodically (e.g., a transmission period on the order of seconds or shorter) transmit the generated correction data to reference station data distribution server 30.

Monitor device 40 receives, from host server 20, information such as the set snow removal area, travel route, allowable distance, and allowable distance range, the received positioning result, and positioning terminal 10 and another positioning terminal 10 to which an alarm output instruction is to be transmitted. Monitor device 40 displays these pieces of information on a display included therein. Monitor device 40 may be included in host server 20 or a computer owned by a user such as an operation manager, or may be mounted on snowplow 50.

The worker drives and operates snowplow 50. As described above, positioning terminal 10 is mounted on snowplow 50. Snowplow 50 is not limited to one that a worker rides, and may be driven and operated remotely, instead. Snowplow 50 may also be capable of automatic driving. For example, snowplow 50 may automatically travel in accordance with vehicle operation instructions (a velocity instruction, an acceleration instruction, a steering operation instruction, etc.) received from host server 20 through positioning terminal 10. Snowplow 50 is an example of a mobile object, a different (another) mobile object, a first mobile object, or a second mobile object in the present disclosure. In addition, workers may drive and operate some of snowplows 50, and the other snowplows 50 may perform automatic driving. In this case, among snowplows 50, a worker may drive and operate only leading snowplow 50, and the other snowplows 50 may perform automatic driving in conjunction with leading snowplow 50 so that the other snowplows 50 travel along travel routes based on a travel route of leading snowplow 50.

### <Configuration of Positioning Terminal>

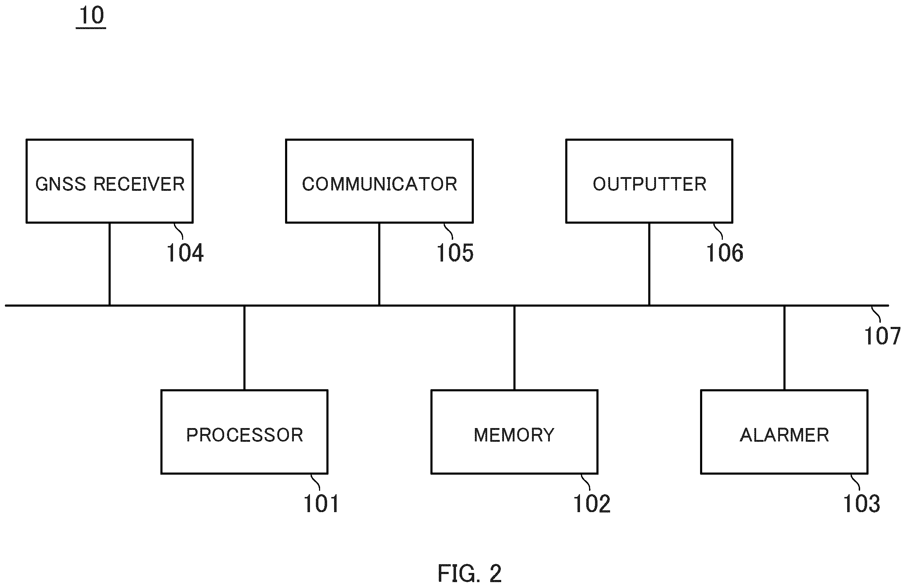

FIG. 2 is a block diagram illustrating an example of configuration of positioning terminal 10 according to Embodiment 1. Positioning terminal 10 illustrated in FIG. 2 may be mounted on snowplow 50. As illustrated in FIG. 2, positioning terminal 10 includes processor 101, memory 102, alarmer 103, GNSS receiver 104, communicator 105, outputter 106, and bus 107.

Processor 101 may be achieved by a processing device such as a central processing unit (CPU). Processor 101 controls overall operation (e.g., the other elements of positioning terminal 10) of positioning terminal 10. Processor 101 may also be referred to as a computer, a regulator, a calculator, a controller, or the like.

Processor 101 generates positioning terminal positioning data using a satellite signal from a GNSS satellite. The positioning terminal positioning data may be generated by GNSS receiver 104 and output to processor 101, instead.

Processor 101 measures (determines) a position, velocity, acceleration, and a travel direction of positioning terminal 10 by performing RTK processing using the positioning terminal positioning data and correction data from reference station data distribution server 30. When positioning terminal 10 includes a velocity sensor and an acceleration sensor, the velocity sensor and the acceleration sensor may measure the velocity and the acceleration of positioning terminal 10, respectively, and processor 101 may obtain the velocity and the acceleration from the velocity sensor and the acceleration sensor, respectively, and determine the velocity and the acceleration of positioning terminal 10. Such measurement may be performed when the satellite signal is received from the GNSS satellite or at certain time intervals such as every 0.2 second, every 0.5 second, or every 1 second. Processor 101 outputs (i.e., stores) a positioning result obtained as a result of the positioning to memory 102. In the present disclosure, the positioning result relating to positioning terminal 10 includes the position (latitude and longitude), the velocity, and the travel direction of positioning terminal 10.

Each time the measurement is performed, processor 101 transmits a positioning result obtained as a result of positioning to host server 20 through communicator 105. Processor 101 receives an alarm output instruction, an alarm output cancellation instruction, and a vehicle operation instruction from host server 20 through communicator 105.

Upon receiving the alarm output instruction from host server 20, processor 101 controls alarmer 103 such that alarmer 103 outputs an alarm according to the alarm output instruction. Upon receiving the alarm output cancellation instruction from host server 20, processor 101 controls alarmer 103 in such a way as to cancel output of an alarm in accordance with the alarm output cancellation instruction. Upon receiving the vehicle operation instruction from host server 20, processor 101 transmits the vehicle operation instruction to snowplow 50. The vehicle operation instruction may be transmitted to snowplow 50 without using processor 101, instead.

Memory 102 may be, for example, one or more of a DRAM (dynamic random-access memory), an HDD (hard disk drive), an SSD (solid-state drive), and the like. Memory 102 obtains various pieces of information from the other elements and temporarily or permanently holds the various pieces of information. Memory 102 is a general term for a so-called primary storage device and a secondary storage device. A plurality of memories 102 may be physically provided, instead.

Memory 102 stores, for example, programs to be executed by processor 101 to operate positioning terminal 10, data necessary for positioning terminal 10 to operate, data generated by processor 101, satellite signals transmitted from GNSS satellites, positioning terminal positioning data, correction data transmitted from reference station data distribution server 30, positioning results obtained by processor 101, alarm output instructions, alarm output cancellation instruction, and vehicle operation instructions transmitted from host server 20, and the like.

Alarmer 103 outputs an alarm in accordance with occurrence of an alarm event. Alarmer 103 may output an alarm by, for example, ringing a buzzer, vibrating positioning terminal 10, outputting an alarm sound through outputter 106, or any combination of these. Alarmer 103 may change an alarming method (e.g., sound volume, a sound pattern, etc.) in accordance with a type of alarm event. In addition, alarmer 103 may cancel an alarm in accordance with occurrence of an alarm cancellation event and output, through outputter 106, a sound, a voice, or the like indicating that output of an alarm is cancelled.

GNSS receiver 104 receives a satellite signal transmitted from a GNSS satellite. GNSS receiver 104 may generate positioning terminal positioning data regarding positioning terminal 10 using the received satellite signal. GNSS receiver 104 outputs the satellite signal to processor 101 and memory 102. After generating positioning terminal positioning data, GNSS receiver 104 outputs the positioning terminal positioning data to processor 101 and memory 102.

Communicator 105 may be achieved, for example, using a communication interface capable of communicating with a communication network such as a cellular communication network. Communicator 105 communicates with external devices through a communication path. The devices with which communicator 105 communicates (communication targets) include, for example, host server 20 and reference station data distribution server 30.

Communicator 105 receives correction data transmitted from reference station data distribution server 30. Communicator 105 receives alarm output instructions, alarm output cancellation instructions, and vehicle operation instructions transmitted from host server 20. Communicator 105 outputs the received correction data, alarm output instructions, alarm output cancellation instructions, and vehicle operation instructions to processor 101 and memory 102. Each alarm output cancellation instruction may include a sound, a voice, or the like indicating that output of an alarm is cancelled, or host server 20 may transmit, separately from the alarm output cancellation instruction, a signal including a sound, a voice, or the like indicating that output of an alarm is cancelled and communicator 105 may receive the signal. Upon receiving the alarm output cancellation instruction or the signal, positioning terminal 10 may output the sound or the voice. Communicator 105 transmits a positioning result obtained as a result of positioning to host server 20. Communicator 105 transmits a vehicle operation instruction to snowplow 50.

Outputter 106 may be achieved, for example, using an output interface such as a display. In addition, or alternatively, outputter 106 may be achieved using an output interface for sound, vibration, or the like. Outputter 106 presents or provides information for the outside. The information presented or provided by outputter 106 includes a positioning result obtained by processor 101 and the like.

Processor 101, memory 102, alarmer 103, GNSS receiver 104, communicator 105, and outputter 106 are communicably connected to one another by bus 107.

The above configuration of positioning terminal 10 is an example. Some of the components of positioning terminal 10 may be integrated together. Some of the components of positioning terminal 10 may be divided into a plurality of elements. Some of the components of positioning terminal 10 may be omitted. Other elements may be added to positioning terminal 10. For example, an inputter, which may be a touch display, a keyboard, a mouse, or the like, may be added to positioning terminal 10.

### [Positioning Data]

Next, positioning data will be described. Positioning data includes, for example, pseudo-distance information, carrier phase information, and Doppler frequency information.

The pseudo-distance information is information regarding a distance between a satellite and a receiver (e.g., the reference station or positioning terminal 10). The receiver is capable of calculating the distance to the satellite by analyzing a positioning signal. For example, the receiver obtains time taken for the positioning signal to reach on the basis of the following information.
(1) A difference between a pattern of a code carried by the positioning signal and a pattern (replica) of a code generated by the receiver
(2) A time when the satellite generated the signal and a time when the receiver received the signal

The time when the satellite generated the signal is included in a message (NAVDATA) of the positioning signal.

The receiver obtains a pseudo-distance between the satellite and the receiver by multiplying the time taken for the positioning signal to reach by the speed of light. The pseudo-distance includes an error caused by a difference between a clock of the satellite and a clock of the receiver and the like. The pseudo-distance information is generated for four or more satellites in order to reduce errors.

The carrier phase information is a phase of the positioning signal received by the receiver. The positioning signal is a certain sine wave. The receiver can calculate a phase of the positioning signal by analyzing the received positioning signal.

The Doppler frequency information is information regarding relative speeds of the satellite and the receiver. The receiver can generate the Doppler frequency information by analyzing the positioning signal.

### [RTK Processing]

Next, RTK processing will be described. RTK processing is processing where RTK, which is one of interference positioning methods, is performed.

RTK is a positioning method where a position of a certain point is measured using a carrier phase integrated value of a positioning signal transmitted from a satellite. The carrier phase integrated value is the sum of (1) the number of waves of the positioning signal and (2) phases from the satellite to the certain point.

Once the carrier phase integrated value is obtained, a distance between the satellite and the certain point can be obtained since frequency (and wavelength) of the positioning signal is known. Because the number of waves of the positioning signal is an unknown value, the number of waves of the positioning signal is called integer ambiguity or an integer bias.

In RTK, noise reduction and estimation (or determination) of integer ambiguity are performed.

In RTK, for example, noise can be reduced by calculating a difference called a double difference. The double difference is a difference between values of differences (single differences), calculated by two receivers (e.g., the reference station and positioning terminal 10), in the carrier phase integrated value in relation to two satellites. Because four or more satellites are used in positioning based on RTK, the same number of double differences as the number of combinations of the four or more satellites is calculated. Reference station positioning data generated by the reference station and positioning terminal positioning data generated by positioning terminal 10, for example, are used for the calculation of double differences.

In RTK, various methods can be used to estimate the integer ambiguity. The integer ambiguity is estimated by performing a procedure of, for example, (1) estimation of a float solution in a least squares method and (2) verification of a fixed solution based on the float solution.

The estimation of a float solution in the least squares method is performed by creating simultaneous equations using a combination of double differences generated for each time unit and solving the created simultaneous equations using the least squares method. In this processing, for example, reference station positioning data generated by the reference station, positioning terminal positioning data generated by positioning terminal 10, and known coordinates of the reference station are used. A real estimate of the integer ambiguity estimated in this manner is called a float solution (estimated solution).

Whereas the float solution obtained as described above is a real number, a true value of the integer ambiguity is an integer. The float solution, therefore, is converted into an integer through "rounding". Here, there can be a plurality of candidates for a combination for rounding the float solution.

A correct integer is verified among the plurality of candidates. A solution found, as a result of the verification, to be probable as an integer bias is called a fixed solution (accurate positioning solution). In an example, a quality check is performed using an AR (ambiguity ratio) value obtained as a result of the RTK processing, and a correct integer is verified on the basis of a result of the quality check. In order to efficiently narrow down candidates for an integer, reference station positioning data generated by a reference station may be used.

### [Positioning Terminal Position Measurement (Determination) Based on RTK Processing]

Next, measurement (determination) of a position (coordinates on Earth) of positioning terminal 10 performed by processor 101 of positioning terminal 10 will be described.

Processor 101 performs interference positioning based on RTK (RTK processing) using, for example, positioning terminal positioning data from positioning terminal 10 and reference station positioning data from the reference station (i.e., correction data transmitted from reference station data distribution server 30), and calculates a positioning solution (a fixed solution or a float solution). A positioning solution obtained through RTK processing may also be referred to as an "RTK positioning solution".

Processor 101 performs a quality check using an AR value obtained through RTK processing. When the AR value is larger than or equal to a certain threshold (e.g., 3.0), processor 101 determines that a correct fixed solution has been obtained, and outputs the fixed solution. When the AR value is smaller than the certain threshold, processor 101 determines that a correct positioning solution has not been obtained, and outputs a float solution.

Processor 101 then determines the RTK positioning solution as the position (coordinates on Earth) of positioning terminal 10.

### <Configuration of Host Server>

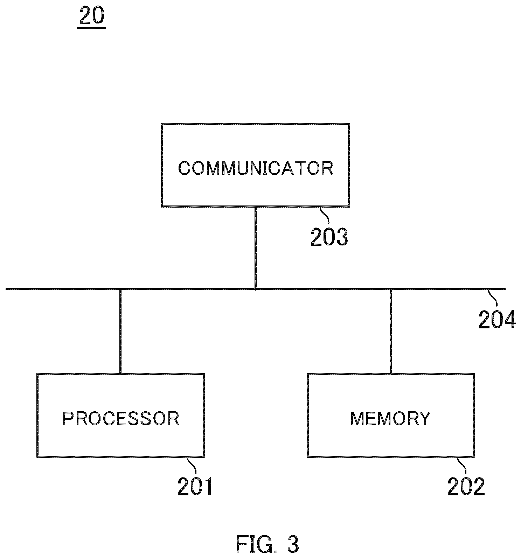

FIG. 3 is a block diagram illustrating an example of configuration of host server 20 according to Embodiment 1. As illustrated in FIG. 3, host server 20 includes processor 201, memory 202, communicator 203, and bus 204.

Processor 201 may be achieved by a processing device such as a CPU. Processor 201 controls overall operation of host server 20 (e.g., the other elements of host server 20). Processor 201 may also be referred to as a computer, a regulator, a calculator, a controller, or the like.

Processor 201 sets in advance a snow removal area, order (positional relationship) of snowplows 50, travel routes of snowplows 50, an allowable distance within which snowplows 50 may deviate from the corresponding travel routes, and an allowable distance range between snowplow 50 and another snowplow 50 ahead. The order (positional relationship) of snowplows 50 may be, for example, a leading snowplow, two snowplows located to the left and the right behind the leading snowplow, and one snowplow located to the left or the right behind each of these two snowplows. For example, processor 201 may set the snow removal area, the order (positional relationship) of snowplows 50, the travel routes, the allowable distance, and the allowable distance range on the basis of area information, value information, and the like input by the user, such as the operation manager, through an inputter (not illustrated). For example, the allowable distance may be smaller than a distance with which some snow is left behind and have a margin. For example, the allowable distance range may be set in consideration of a fact that snowplow 50 might collide with another snowplow 50 ahead when the allowable distance range is too small and that an operation delay might be caused when the allowable distance range is too large. In outdoors, snow guided to the left or the right by leading snowplow 50 might, due to wind or the like, scatter onto a route from which snow has been removed before following snowplow 50 scoops the snow. From this perspective, too, the allowable distance range is desirably not too large. The allowable distance range may be dynamically changed in accordance with required operation time, changes in weather, and the like.

The allowable distance within which snowplow 50 may deviate from a travel route may be different depending on snowplow 50 or may be common to snowplows 50. The allowable distance range between snowplow 50 and another snowplow 50 ahead, too, may be different depending on snowplow 50 or may be common to snowplows 50.

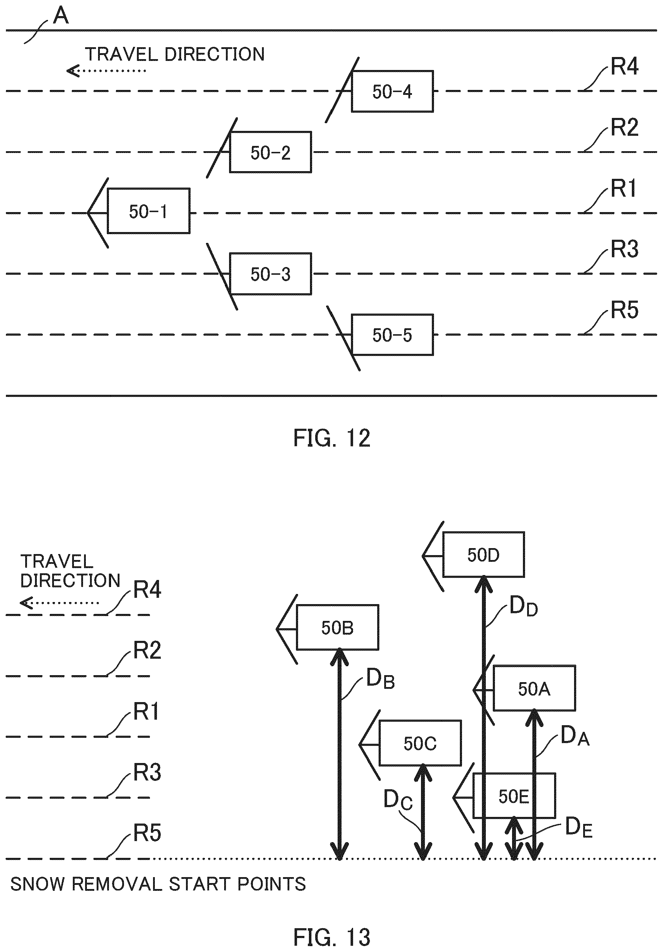

FIG. 12 illustrates an example of snow removal area A, order (positional relationship) of snowplows 50-1 to 50-5, and parallel travel routes R1 to R5 of snowplows 50-1 to 50-5 according to embodiments of the present disclosure. With respect to the allowable distance within which snowplow 50 may deviate from the travel route, an allowable distance of snowplow 50-1 from travel route R1, an allowable distance of snowplow 50-2 from travel route R2, an allowable distance of snowplow 50-3 from travel route R3, an allowable distance of snowplow 50-4 from travel route R4, and an allowable distance of snowplow 50-5 from travel route R5 may be independently set or equally (collectively) set in the example illustrated in FIG. 12. Similarly, with respect to the setting of the allowable distance range, an allowable distance range between snowplow 50-1 and snowplow 50-2, an allowable distance range between snowplow 50-1 and snowplow 50-3, an allowable distance range between snowplow 50-2 and snowplow 50-4, and an allowable distance range between snowplow 50-3 and snowplow 50-5 may be independently set or equally (collectively) set in the example illustrated in FIG. 12.

As illustrated in FIG. 12, in the present embodiment, snow is widely removed by driving a plurality of snowplows 50 along substantially parallel travel routes. Here, in order to certainly remove snow, snow plowed by leading snowplow 50 needs to be guided out of the snow removal area by following snowplows 50. In FIG. 12, a front of leading snowplow 50-1 is wedged, and plowed snow is guided to the left and the right behind snowplow 50-1. Following snowplow 50-2, on the other hand, protrudes forward on a left side thereof in a travel direction, and snowplow 50-3 protrudes forward on a right side thereof in the travel direction. Snow plowed by snowplow 50-1 to the left and the right, therefore, is guided further rearward along with snow removed by snowplows 50-2 and 50-3 on travel routes R2 and R3. When snowplows 50-4 and 50-5 further guide the snow out of the snow removal area, snow on travel routes R1 to R5 is removed. Here, a front of each snowplow 50 is designed to have an angle with which snow guided by leading snowplow 50 will not return to a travel route from which snow has been removed by leading snowplow 50, that is, designed to have a shape with which snowplow 50 traveling at a more rearward position in a formation guides snow more outward in the snow removal area. When the order of traveling of snowplows 50 changes, therefore, snow might return to a travel route from which snow has been removed. That is, the plurality of snowplows 50 illustrated in FIG. 12 need to travel along the substantially parallel travel routes R1 to R5 without changing the order of traveling. When leading snowplow 50 and following snowplow 50 are too far from each other, on the other hand, snow guided outward by leading snowplow 50 in the snow removal area might return to a travel route of snowplow 50 due to strong wind or the like. In order to achieve an efficient snow removal operation, therefore, the plurality of snowplow 50 desirably travels along the substantially parallel routes without overtaking other snowplows 50 while keeping distances to other snowplows 50 traveling along adjacent routes within a certain range that is not too short or too long. In order not to leave snow behind, a distance between adjacent travel routes is desirably close to width of each snowplow 50. In other words, when snowplows 50 are not far enough from each other to safely pass each other or drive alongside each other, efficiency of snow removal improves.

The number of snowplows 50 for removing snow is not limited to five, and the number of corresponding travel routes is not limited to five.

Each time processor 201 receives a positioning result from positioning terminal 10 mounted on one of snowplows 50, for example, processor 201 determines, on the basis of the positioning result, the snow removal area, the travel routes, the allowable distance, and/or the allowable distance range, whether an alarm event or an alarm cancellation event has occurred (detects an alarm event or an alarm cancellation event). Examples of the alarm event and the alarm event and reasons why an alarm should be given in such events are as follows.

- Examples of alarm event
(1) Snowplow 50 is deviating from a predetermined travel route by a predetermined allowable distance or longer in a snow removal area.
   The snow removal operation in the present embodiment is achieved when each snowplow 50 accurately travels along the corresponding travel route. When one of snowplows 50 is deviating from the corresponding travel route, therefore, an alarm is output in order not to leave snow behind.
(2) A distance between snowplow 50 and another snowplow 50 ahead in a snow removal area becomes smaller than or equal to a lower limit value of a predetermined allowable distance range (snowplow 50 and another snowplow 50 ahead are too close to each other).
   In the snow removal operation in the present embodiment, following snowplow 50 must not overtake leading snowplow 50, and a distance between routes is too small for snowplows 50 to drive alongside each other. In order to avoid collision between snowplows 50, an alarm is output when snowplows 50 become too close to each other.
(3) A distance between snowplow 50 and another snowplow 50 ahead in a snow removal area becomes larger than or equal to an upper limit value of a predetermined allowable distance range (snowplow 50 and another snowplow 50 ahead are too far from each other).
   Since each snowplow 50 is prohibited from overtaking leading snowplow 50 in the snow removal operation in the present embodiment, when snowplows 50 become too far from each other, travel of all following snowplows 50 is delayed, which results in a delay in the entirety of the operation. In order to efficiently perform the snow removal operation, therefore, an alarm is output when snowplows 50 become too far from each other.

### - Examples of alarm cancellation event

(1) Snowplow 50 has moved out of a snow removal area (i.e., it has been determined that the snow removal operation in the snow removal area has ended).
(2) Snowplow 50 that deviated from a corresponding travel route in a snow removal area has returned within an allowable distance within which snowplow 50 may deviate from the travel route or snowplow 50 that went outside an allowable distance range from another snowplow 50 ahead has returned within the allowable distance range.

In the above description, "snowplow 50 is deviating from a travel route by an allowable distance or longer" may be replaced by "snowplow 50 is deviating from a travel route by a distance longer than an allowable distance". In the above description, "a distance between snowplow 50 and another snowplow 50 ahead becomes smaller than or equal to a lower limit value of a predetermined allowable distance range" may be replaced by "a distance between snowplow 50 and another snowplow 50 ahead becomes smaller than a lower limit value of a predetermined allowable distance range". "A distance between snowplow 50 and another snowplow 50 ahead in a snow removal area becomes larger than or equal to an upper limit value of a predetermined allowable distance range" may be replaced by "a distance between snowplow 50 and another snowplow 50 ahead in a snow removal area becomes larger than an upper limit value of a predetermined allowable distance range".

Processor 201 generates an alarm output instruction for notifying the worker who is driving snowplow 50 on which positioning terminal 10 is mounted and that is associated with positioning terminal 10 of occurrence of a detected alarm event. Processor 201 outputs the alarm output instruction to memory 202. Processor 201 transmits the alarm output instruction to positioning terminal 10 through communicator 203. Processor 201 may generate, along with or separately from the alarm output instruction, vehicle operation instructions for snowplow 50 to automatically travel along a travel route or within an allowable distance from the travel route and within an allowable distance from another snowplows 50 ahead. Processor 201 may output the vehicle operation instructions to memory 202 and transmit the vehicle operation instructions to positioning terminal 10 through communicator 203.

Processor 201 generates an alarm output cancellation instruction for notifying positioning terminal 10 mounted on snowplow 50 of occurrence of a detected alarm cancellation event and cancelling output of an alarm. Processor 201 outputs the alarm output cancellation instruction to memory 202. Processor 201 transmits the alarm output cancellation instruction to positioning terminal 10 through communicator 203. The alarm output cancellation instruction may include a sound, a voice, or the like indicating cancellation of output of an alarm, or communicator 203 may transmit a sound, a voice, or the like indicating cancellation of output of an alarm to positioning terminal 10 separately from the alarm output cancellation instruction.

Each time processor 201 receives a positioning result from positioning terminal 10 associated with snowplow 50, for example, processor 201 transmits information regarding the set snow removal area, travel routes, allowable distance, and allowable distance range, the received positioning result, positioning terminal 10 and another positioning terminal 10 to which the alarm output instruction is to be transmitted to monitor device 40 through communicator 203 to display the information.

Memory 202 may be, for example, a DRAM, an HDD, an SSD, and/or the like. Memory 202 obtains various pieces of information from the other elements and temporarily or permanently holds the various pieces of information. Memory 202 is a general term for a so-called primary storage device and a secondary storage device. A plurality of memories 202 may be physically provided, instead.

Memory 202 stores, for example, programs to be executed by processor 201 to operate host server 20, data necessary for host server 20 to operate, data generated by processor 201, positioning results transmitted from positioning terminals 10, information regarding set snow removal areas, travel routes, allowable distances, and allowable distance ranges and generated alarm output instructions, alarm output cancellation instruction, and vehicle operation instructions, and the like.

Communicator 203 receives a positioning result transmitted from one of positioning terminals 10. Communicator 203 outputs the received positioning result to processor 201 and memory 202. Communicator 203 transmits alarm output instructions, alarm output cancellation instructions, and vehicle operation instructions to positioning terminal 10.

Processor 201, memory 202, and communicator 203 are communicably connected to one another by bus 204.

The above configuration of host server 20 is an example. Some of the components of host server 20 may be integrated together. Some of the components of host server 20 may be divided into a plurality of elements. Some of the components of host server 20 may be omitted. Other elements may be added to host server 20. For example, an inputter, which may be a touch display, a keyboard, a mouse, or the like, may be added to host server 20.

Next, detection of an alarm event by host server 20 (processor 201) will be described.

[Determination Whether Positioning Terminal (Snowplow) Is Located within Snow Removal Area]

Processor 201 determines, on the basis of a received positioning result (a position: latitude and longitude) of positioning terminal 10 and a position of a snow removal area (latitude and longitude), whether positioning terminal 10 (snowplow 50) is located within the snow removal area.

### [Determination Whether Positioning Terminal (Snowplow) Is Deviating from Travel Route by Allowable Distance or Longer]

Processor 201 determines, on the basis of a received positioning result (a position: latitude and longitude) of positioning terminal 10, a travel route (straight line segment), and an allowable distance (threshold), whether a distance between an intersection between a perpendicular line from the position of positioning terminal 10 to the travel route and the travel route and the position of positioning terminal 10 (i.e., a shortest distance between the position of positioning terminal 10 and the travel route) is larger than or equal to the allowable distance. When the distance is larger than or equal to the allowable distance, processor 201 determines that positioning terminal 10 (snowplow 50) is deviating from the travel route by the allowable distance or longer. When the distance is not larger than or equal to the allowable distance, processor 201 determines that positioning terminal 10 (snowplow 50) is not deviating from the travel route by the allowable distance or longer.

### [Determination Whether Positioning Terminal (Snowplow) and Positioning Terminal Ahead (Snowplow Ahead) Are Too Close to Each Other]

Processor 201 determines, on the basis of set order (positional relationship) of the positioning terminals, received positioning results (position: latitude and longitude) of front and rear positioning terminals 10 adjacent to each other, and an allowable distance range, whether a distance between the front and rear positioning terminals 10 (snowplows 50) is smaller than or equal to a lower limit value of the allowable distance range. When the distance is smaller than or equal to the lower limit value of the allowable distance range, processor 201 determines that positioning terminal 10 (snowplow 50) and the positioning terminal ahead (snowplow 50 ahead), which are adjacent to each other, are too close to each other.

### [Determination Whether Positioning Terminal (Snowplow) and Positioning Terminal Ahead (Snowplow Ahead) Are Too Far from Each Other]

Processor 201 determines, on the basis of set order (positional relationship) of the positioning terminals, received positioning results (position: latitude and longitude) of front and rear positioning terminals 10, and an allowable distance range, whether a distance between the front and rear positioning terminals 10 (snowplows 50) is larger than or equal to an upper limit value of the allowable distance range. When the distance is larger than or equal to the upper limit value of the allowable distance range, processor 201 determines that positioning terminal 10 (snowplow 50) and the positioning terminal ahead (snowplow 50 ahead), which are adjacent to each other, are too far from each other.

Detection of an alarm cancellation event by host server 20 (processor 201) may be performed by performing the same comparison as in the above-described detection of an alarm event.

A travel route along which snowplow 50 travels is an example of a "target within a snow removal area" or a "target within a foreign object removal area" in the present disclosure. In addition, another snowplow 50 (snowplow 50 ahead) (or (another) positioning terminal 10 mounted on another snowplow 50) adjacent to snowplow 50 and traveling ahead snowplow 50 is another example of the "target within a snow removal area" or the "target within a foreign object removal area" in the present disclosure. The target is used to correct a position of snowplow 50.

### [Generation of Alarm Output Instruction]

Next, generation of an alarm output instruction will be described.

First, when it is found as a result of the above-described determination that snowplow 50 is deviating from a travel route by the allowable distance or longer in a snow removal area, processor 201 generates an alarm output instruction for an alarm in a first style.

Secondly, when it is found as a result of the above-described determination that a distance between snowplow 50 and another snowplow 50 ahead in a snow removal area becomes smaller than or equal to the lower limit value of the allowable distance range, processor 201 generates an alarm output instruction for an alarm in a second style.

Thirdly, when it is found as a result of the above-described determination that a distance between snowplow 50 and another snowplow 50 ahead in a snow removal area becomes larger than or equal to the upper limit value of the allowable distance range, processor 201 generates an alarm output instruction for an alarm in a third style.

As described above, the alarm in the first style, the alarm in the second style, and the alarm in the third style may be different from one another. For example, the alarms in these styles may be different from one another in terms of sound volume, a period, a sound pattern, or a combination of these.

When a condition occurs under which the alarm output instruction for the alarm in the first style and the alarm output instruction for the alarm in the second style or the alarm output instruction for the alarm in the third style are simultaneously generated, processor 201 may perform the following operation. That is, processor 201 may generate only the alarm output instruction for the alarm in the first style, only the alarm output instruction for the alarm in the second style or the alarm output instruction for the alarm in the third style, or both the alarm output instruction for the alarm in the first style and the alarm output instruction for the alarm in the second style or the alarm output instruction for the alarm in the third style. Which alarm output instruction(s) is to be generated may be selected by the user, such as the operation manager, through the inputter (not illustrated) or fixed in alarm system 1.

Priority levels given to the alarm in the second style, which indicates closeness to snowplow 50 ahead, the alarm in the first style, which indicates deviation from a travel route, and the alarm in the third style, which indicates farness from snowplow 50 ahead, may descend in this order. A reason why such priority levels are used is as follows. Since, as described above, snowplows 50 close to each other are likely to collide with each other when travel routes are designed in such a way as to increase efficiency of snow removal, such an accident needs to be avoided as a top priority. In addition, whereas some snow is likely to be left behind when snowplow 50 is deviating from a corresponding travel route, snow is unlikely to be left behind even when snowplows 50 are far from each other unless there is strong wind or the like. The priority level of prevention of deviation from a travel route, therefore, is higher than that of snowplows 50 becoming too far from each other.

By using different styles of alarming, the workers who are driving snowplows 50 on which positioning terminals 10 are mounted can intuitively understand ongoing conditions. The styles may be replaced by modes.

### <Operation of Alarm System>

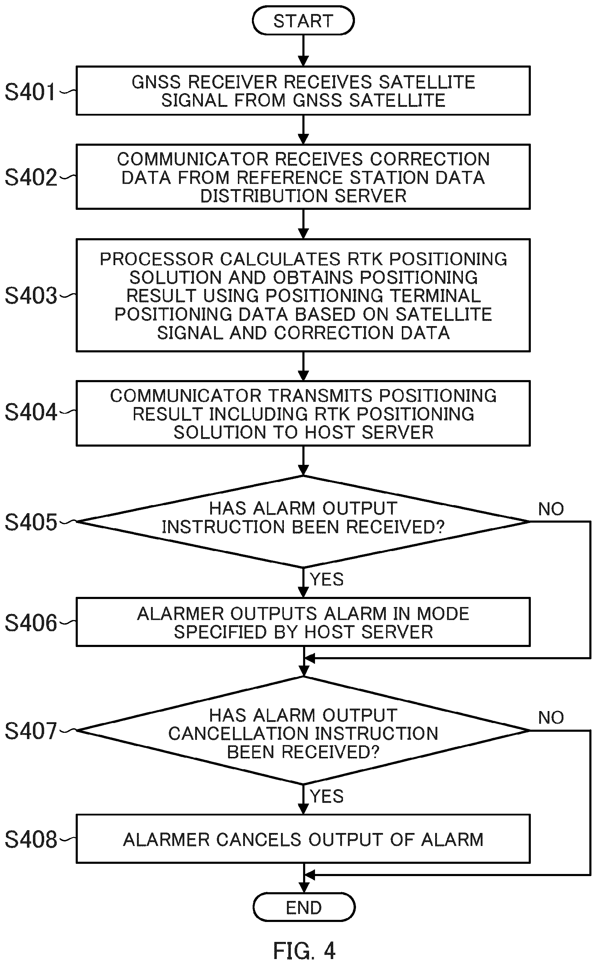

Next, an example of operation of alarm system 1 according to Embodiment 1 will be described with reference to FIGS. 4, 5, 6A, and 6B.

### [Operation of Positioning Terminal]

FIG. 4 is a diagram illustrating an example of operation of positioning terminal 10 according to Embodiment 1.

In step S401, GNSS receiver 104 receives a satellite signal transmitted from a GNSS satellite.

In step S402, communicator 105 receives correction data transmitted from reference station data distribution server 30.

In step S403, processor 101 performs RTK processing using positioning terminal positioning data based on the satellite signal and the correction data to calculate an RTK positioning solution and a positioning result.

In step S404, communicator 105 transmits the positioning result including the RTK positioning solution to host server 20.

In step S405, processor 101 or communicator 105 determines whether communicator 105 has received an alarm output instruction (e.g., within a certain period of time since the transmission of the positioning result).

When communicator 105 has received an alarm output instruction (e.g., within the certain period of time since the transmission of the positioning result) (YES in step S405), alarmer 103 outputs, in step S406, an alarm in a style specified (determined) by host server 20. Next, the flow proceeds to step S407.

When communicator 105 has not received an alarm output instruction (e.g., within the certain period of time since the transmission of the positioning result) (NO in step S405), on the other hand, the flow proceeds to step S407.

In step S407, processor 101 or communicator 105 determines whether communicator 105 has received an alarm output cancellation instruction (e.g., within a certain period of time since the transmission of the positioning result).

When communicator 105 has received an alarm output cancellation instruction (e.g., within the certain period of time since the transmission of the positioning result) (YES in step S407), alarmer 103 cancels, in step S408, the output of the alarm. The cancellation of the output of the alarm may be manually performed by the worker. The flow then ends.

When communicator 105 has not received an alarm output cancellation instruction (e.g., within the certain period of time since the transmission of the positioning result) (NO in step S407), on the other hand, the flow ends.

The process in FIG. 4 is then repeated.

### [Operation of Host Server]

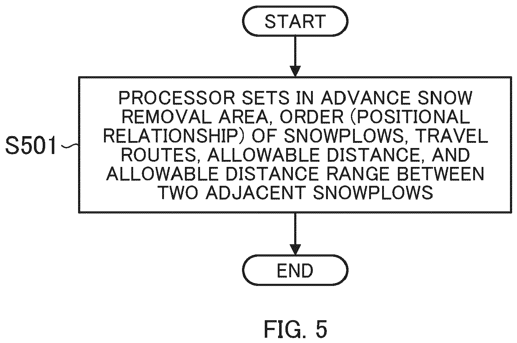

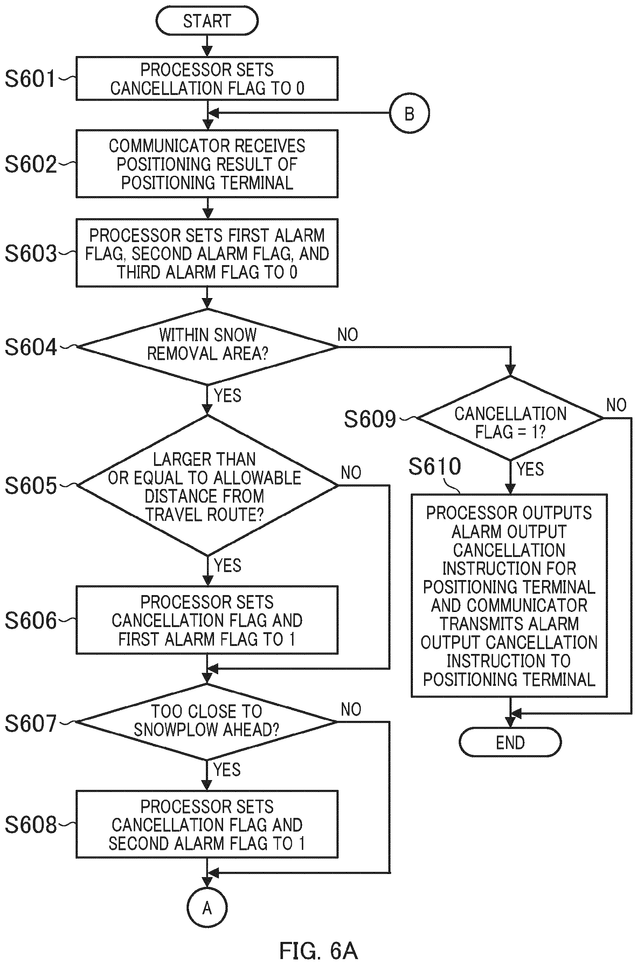

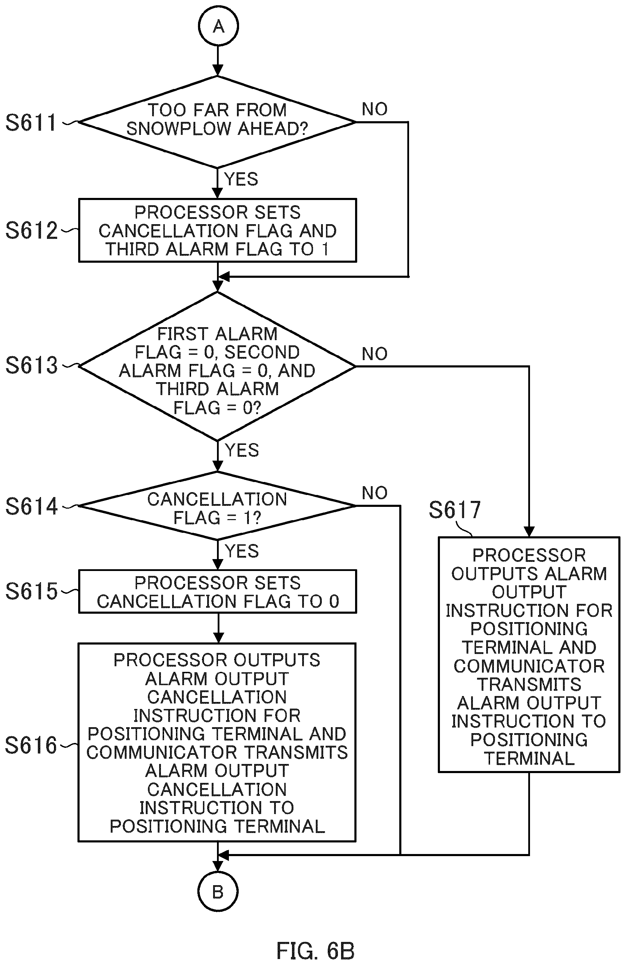

FIGS. 5, 6A, and 6B are diagrams illustrating examples of operation of host server 20 according to Embodiment 1. FIG. 5 relates to presetting of host server 20.

In step S501, processor 201 sets in advance a snow removal area, order (positional relationship) of snowplows 50, travel routes of snowplow 50, an allowable distance within which snowplows 50 may deviate from the travel routes, and an allowable distance range between snowplow 50 and another snowplow 50 ahead (two adjacent snowplows 50).

As described above, the snow removal area, the order (positional relationship) of snowplows 50, the travel routes, the allowable distance, and the allowable distance range may be set through user inputs. The process in FIG. 5 may be performed as necessary.

Next, another example of the operation of host server 20 will be described with reference to FIGS. 6A and 6B. FIGS. 6A and 6B are performed for each snowplow 50.

In step S601, processor 201 sets a cancellation flag for determining whether to cancel output of an alarm to 0.

In step S602, communicator 203 receives a positioning result of positioning terminal 10 transmitted from positioning terminal 10.

In step S603, processor 201 sets a first alarm flag, a second alarm flag, and a third alarm flag to 0. The first alarm flag is a flag for determining whether snowplow 50 is deviating from a travel route by an allowable distance or longer in a snow removal area. The second alarm flag is a flag for determining whether a distance between snowplow 50 and another snowplow 50 ahead has become smaller than or equal to a lower limit value of an allowable distance range in a snow removal area. The third alarm flag is a flag for determining whether a distance between snowplow 50 and another snowplow 50 ahead has become larger than or equal to an upper limit value of an allowable distance range in a snow removal area.

In step S604, processor 201 determines whether positioning terminal 10 is located within a snow removal area on the basis of a set snow removal area and a received positioning result (the position of positioning terminal 10).

When determining that positioning terminal 10 is not located within the snow removal area (NO in step S604), processor 201 determines, in step S609, whether the cancellation flag is 1.

When the cancellation flag is 1 (YES in step S609), processor 201 outputs, in step S610, an alarm output cancellation instruction for positioning terminal 10, and communicator 203 transmits the alarm output cancellation instruction to positioning terminal 10. The flow then ends.

When the cancellation flag is 0 (NO in step S609), on the other hand, the flow ends.

When determining in step S604 that positioning terminal 10 is located within the snow removal area (YES in step S604), processor 201 determines, in step S605, whether snowplow 50 is deviating from a travel route by an allowable distance or longer on the basis of the travel route of snowplow 50 and the received positioning result (the position of positioning terminal 10).

When determining that snowplow 50 is deviating from the travel route by the allowable distance or longer (YES in step S605), processor 201 sets, in step S606, the cancellation flag and the first alarm flag to 1. The flow then proceeds to step S607.

When processor 201 determines that snowplow 50 is not deviating from the travel route by the allowable distance or longer (NO in step S605), on the other hand, the flow proceeds to step S607.

In step S607, processor 201 determines whether snowplow 50 and another snowplow 50 ahead are too close to each other. That is, processor 201 determines, on the basis of received positioning results (positions of positioning terminals 10 mounted on snowplow 50 and the other snowplow 50 ahead), whether a distance between snowplow 50 and the other snowplow 50 ahead is smaller than or equal to a lower limit value of an allowable distance range.

When determining that snowplow 50 and the other snowplow 50 ahead are too close to each other (YES in step S607), processor 201 sets, in step S608, the cancellation flag and the second alarm flag to 1. The flow then proceeds to step S611.

When processor 201 determines that snowplow 50 and the other snowplow 50 ahead are not too close to each other (NO in step S607), the flow proceeds to step S611.

In step S611, processor 201 determines whether snowplow 50 and the other snowplow 50 ahead are too far from each other. That is, processor 201 determines, on the basis of the received positioning results (the positions of positioning terminals 10 mounted on snowplow 50 and the other snowplow 50 ahead), whether the distance between snowplow 50 and the other snowplow 50 ahead is larger than or equal to an upper limit value of the allowable distance range.

When determining that snowplow 50 and the other snowplow 50 ahead are too far from each other (YES in step S611), processor 201 sets, in step S612, the cancellation flag and the third alarm flag to 1. The flow then proceeds to step S613.

When processor 201 determines that snowplow 50 and the other snowplow 50 ahead are not too far from each other (NO in step S611), on the other hand, the flow proceeds to step S613.

In step S613, processor 201 determines whether the first alarm flag, the second alarm flag, and the third alarm flag are all 0.

When the first alarm flag, the second alarm flag, and the third alarm flag are all 0 (YES in step S613), processor 201 determines, in step S614, whether the cancellation flag is 1.

When the cancellation flag is not 1 (NO in step S614), the flow returns to step S602.

When the cancellation flag is 1 (YES in step S614), on the other hand, processor 201 sets, in step S615, the cancellation flag to 0.

In step S616, processor 201 outputs an alarm output cancellation instruction for positioning terminal 10, and communicator 203 transmits the alarm output cancellation instruction to positioning terminal 10. The flow then returns to step S602.

When at least one of the first alarm flag, the second alarm flag, and the third alarm flag is not 0 in step S613 (NO in step S613), processor 201 outputs, in step S617, an alarm output instruction for positioning terminal 10, and communicator 203 transmits the alarm output instruction to positioning terminal 10. As described above, the alarm output instruction transmitted to positioning terminal 10 may include all alarm output instructions corresponding to the flag of 1 or include one of the alarm output instructions corresponding to the flag of 1. The flow then returns to step S602.

### <Variations>

### [Variation 1-1]

An example has been described above where host server 20 transmits an alarm output instruction and an alarm output cancellation instruction to positioning terminal 10 and positioning terminal 10 outputs an alarm in accordance with the alarm output instruction and cancels the output of the alarm in accordance with the alarm output cancellation instruction. In addition to or instead of this, as implied above, host server 20 may transmit vehicle operation instructions (a velocity instruction, an acceleration instruction, a steering operation instruction, etc.) to positioning terminal 10 so that snowplow 50 automatically travels along a travel route or within an allowable distance from the travel route and within an allowable distance range from another snowplow 50 ahead. Positioning terminal 10 may then transmit the received vehicle operation instructions to (the vehicle control system (the vehicle driving system) of) snowplow 50 through a vehicle communicator (not illustrated) included in positioning terminal 10. As a result, snowplow 50 can automatically travel along the travel route or within the allowable distance from the travel route and within the allowable distance range from another snowplow 50 ahead.

### [Variation 1-2]

Although an example where a distance between positioning terminal 10 (snowplow 50) and another positioning terminal 10 ahead (another snowplow 50 ahead) is used in the determination whether these two positioning terminals 10 are too close to or too far from each other has been described above, the present disclosure is not limited to this example.

For example, processor 201 may determine whether front and rear positioning terminals 10 (snowplows 50) are too close to or too far from each other on the basis of set order (positional relationship) of the positioning terminals, received positioning results (position: latitude and longitude) of the two positioning terminal 10, a travel route (straight line segment) of one of these positioning terminals 10, and an allowable distance range, instead. In this case, processor 201 may determine whether the front and rear positioning terminals 10 (snowplows 50) are too close to or too far from each other by comparing a projection distance between points obtained by projecting positions of the two positioning terminals 10 onto the travel routes with a lower limit value and an upper limit value of the allowable distance range, instead of using a distance between the two positioning terminals 10 (snowplows 50).

### [Variation 1-3]

Although an example where snowplows 50 on which positioning terminals 10 are mounted remove snow in formation has been described above, the present disclosure is not limited to this example. The present disclosure can also be applied to a plurality of mobile objects that moves in formation. For example, the present disclosure may be applied to a plurality of mobile objects (radio-controlled cars etc.) that gives a performance while moving in formation. In addition, the above-described travel routes (movement routes) are not limited to straight line segments. A shape of a snow removal area (geofence) is not limited to a rectangle.

### [Variation 1-4]

Although an example where snowplows 50 on which positioning terminals 10 are mounted remove snow in a V-shaped formation has been described above, the present disclosure is not limited to this example. For example, snowplows 50 may remove snow in a formation having a shape of a straight line segment with either a left side or a right side behind in a travel direction, instead. In this case, fronts of snowplows 50 are desirably shaped such that snow guided by leading snowplow 50 is guided by following snowplow 50 further outward in the snow removal area. Snowplows 50 may remove snow in another formation such as an inverse V shape, instead.

### [Variation 1-5]

Although an example where processor 201 determines whether snowplow 50 on which positioning terminal 10 is mounted is located within a snow removal area (geofence) has been described above, the present disclosure is not limited to this example. When snowplow 50 is located outside the snow removal area, for example, processor 201 may determine whether snowplow 50 has entered or approached another geofence (an area where snowplow 50 might interfere with another facility, a person, or the like etc.), and host server 20 may provide an alarm output instruction indicating the entry or the approach for positioning terminal 10 in accordance with a result of the determination as to entry or approach.

### [Variation 1-6]

Although an example where host server 20 performs the processing in the present disclosure, such as the detection of an alarm event and an alarm cancellation event, has been described above, the present disclosure is not limited to this example. For example, representative positioning terminal 10 among the plurality of positioning terminals 10 may receive positioning results from the individual positioning terminals 10 and perform the processing in the present disclosure instead of host server 20.

### [Effects]

According to Embodiment 1, host server 20 or representative positioning terminal 10 determines, on the basis of positions of positioning terminals 10 mounted on snowplows 50, whether a distance between positioning terminals 10 mounted on snowplows 50 traveling along adjacent travel routes is within an allowable distance range. When the distance is outside the allowable distance range (e.g., the distance is too small or too large), an alarm output instruction for causing a management terminal (may be integrated with positioning terminals 10 or provided at a management center or the like that manages the whole system), which will be described later, that manages the travel of snowplows 50 to output an alarm is generated and transmitted to the management terminal, or positioning terminals 10 output an alarm. As a result, collision between snowplows 50 can be avoided, or efficiency of the operation can be increased by avoiding a delay in the entirety of the operation due to snowplows 50 becoming too far from each other. Alarms, therefore, can be given such that even workers with little experience can appropriately perform the operation.

### (Embodiment 2)

Next, Embodiment 2 of the present disclosure will be described. Embodiment 2 is different from Embodiment 1 in that RTK processing is performed not by positioning terminals but by a host server, that is, a processor of the host server measures (determines) positions of the positioning terminals through the above-described RTK processing. Because configuration of alarm system 1', positioning terminals 10', and host server 20' according to Embodiment 2 is the same as that of alarm system 1, positioning terminals 10, and host server 20, differences from Embodiment 1 will be described.

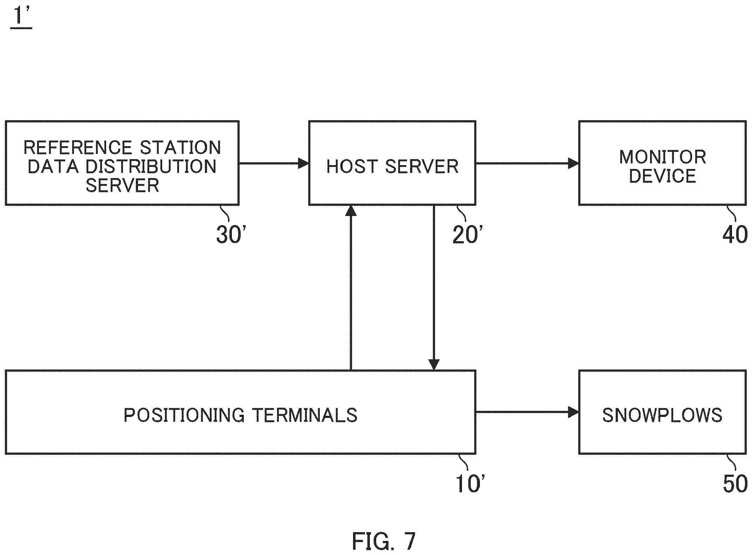

FIG. 7 is a diagram illustrating an example of alarm system 1' according to Embodiment 2. As illustrated in FIG. 7, alarm system 1' includes positioning terminals 10', host server 20', reference station data distribution server 30', monitor device 40, and snowplows 50. Alarm system 1' may also be referred to as an information processing system, a notification system, an alarm system, or the like.

Unlike in Embodiment 1, positioning terminal 10' does not perform RTK processing and measure a position thereof. Positioning terminal 10', therefore, need not receive correction data from reference station data distribution server 30', and transmits, to host server 20', positioning terminal positioning data generated on the basis of a satellite signal received from a GNSS satellite. When positioning terminal 10' includes a velocity sensor and an acceleration sensor, positioning terminal 10' may transmit velocity and acceleration from the velocity sensor and the acceleration sensor to host server 20'. Positioning terminal 10' is an example of the first terminal, the second terminal, the terminal, the different (other) terminal, or the information processing apparatus (corresponds to representative positioning terminal 10', which will be described later) in the present disclosure.

Host server 20' receives the positioning terminal positioning data transmitted from positioning terminal 10' and correction data for performing RTK processing and measuring a position of positioning terminal 10 from reference station data distribution server 30'. Host server 20' is an example of the information processing apparatus in the present disclosure.

Host server 20' perform RTK processing using the received positioning terminal positioning data and correction data to measure the position of positioning terminal 10' (also velocity and acceleration depending on the case). Host server 20' determines, on the basis of a set snow removal area, travel routes, allowable distance, and an allowable distance range, obtained positioning results, and the like, whether to output an alarm to positioning terminal 10' and whether to cause positioning terminal 10' to cancel output of an alarm (i.e., detects an alarm event and an alarm cancellation event). Host server 20' may have a subset or all of functions of reference station data distribution server 30', instead. For example, host server 20' may receive correction data generated by a reference station from the reference station without using reference station data distribution server 30'.

Reference station data distribution server 30' performs RTK processing and transmits correction data for measuring the position of positioning terminal 10' to host server 20'.

### <Configuration of Positioning Terminal>

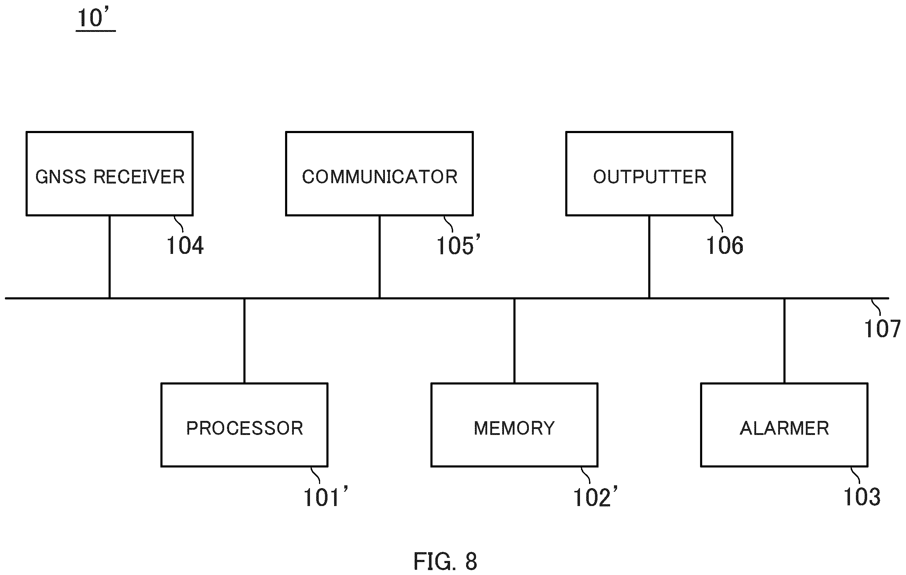

FIG. 8 is a block diagram illustrating an example of configuration of positioning terminal 10' according to Embodiment 2. As illustrated in FIG. 8, positioning terminal 10' includes processor 101', memory 102', alarmer 103, GNSS receiver 104, communicator 105', outputter 106, and bus 107.

As described above, positioning terminal 10' does not perform positioning based on RTK processing. Each time a satellite signal is received from a GNSS satellite, therefore, processor 101' generates positioning terminal positioning data on the basis of the satellite signal and outputs the positioning terminal positioning data to memory 102' and communicator 105'.

Memory 102' need not store correction data from reference station data distribution server 30'. Memory 102' store positioning terminal positioning data.

Each time a satellite signal is received from a GNSS satellite, communicator 105' transmits positioning terminal positioning data input from processor 101' to host server 20'. Communicator 105' may receive a positioning result of positioning terminal 10' transmitted from host server 20' and output the received positioning result to memory 102'.

Processor 101', memory 102', alarmer 103, GNSS receiver 104, communicator 105', and outputter 106 are communicably connected to one another through bus 107.

### <Configuration of Host Server>

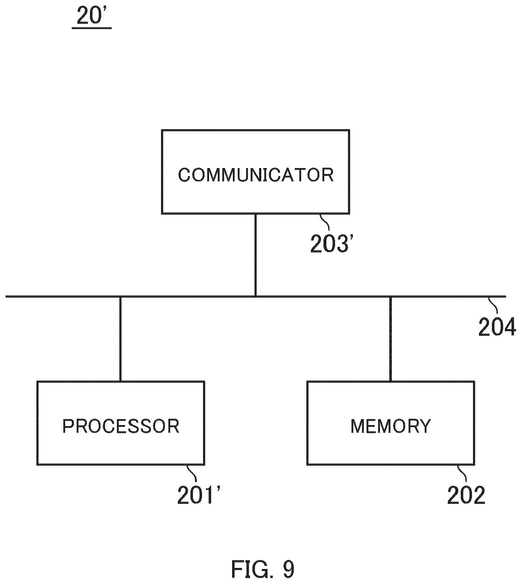

FIG. 9 is a block diagram illustrating an example of configuration of host server 20' according to Embodiment 2. As illustrated in FIG. 9, host server 20' includes processor 201', memory 202, communicator 203', and bus 204.

Unlike in Embodiment 1, for example, each time positioning terminal positioning data is received from positioning terminal 10', processor 201' performs RTK processing on the basis of the positioning terminal positioning data and correction data received from a GNSS satellite and measures (determines) a position, velocity, acceleration, and a travel direction of positioning terminal 10'. Processor 201' outputs a positioning result obtained in this manner to communicator 203' and memory 202. Processor 201' determines, on the basis of at least one of the obtained positioning result, a snow removal area, travel routes, an allowable distance, and an allowable distance arrange, whether or not an alarm event or an alarm cancellation event has occurred (detects an alarm event or an alarm cancellation event).

Processor 201' transmits information regarding the set snow removal area, travel routes, allowable distance, and allowable distance range, the received positioning result, and positioning terminal 10' and another positioning terminal 10' to which an alarm output instruction is to be transmitted to monitor device 40 through communicator 203' to display the information.

Communicator 203' receives positioning terminal positioning data transmitted from positioning terminal 10'. Communicator 203' outputs the positioning terminal positioning data to processor 201' and memory 202. Communicator 203' may transmit a positioning result to positioning terminal 10', instead.

Processor 201', memory 202, and communicator 203' are communicably connected to one another through bus 204.

### <Operation of Alarm System>

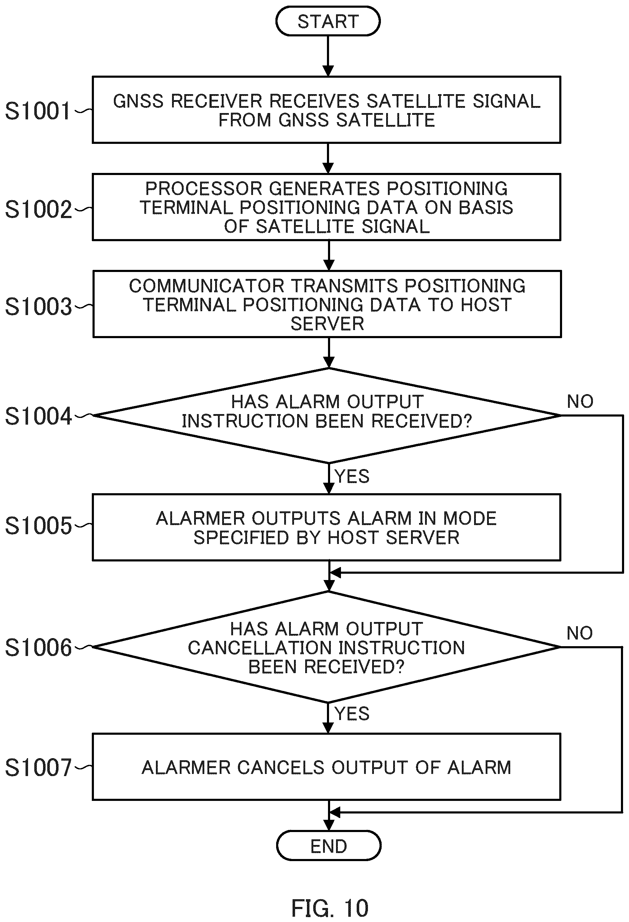

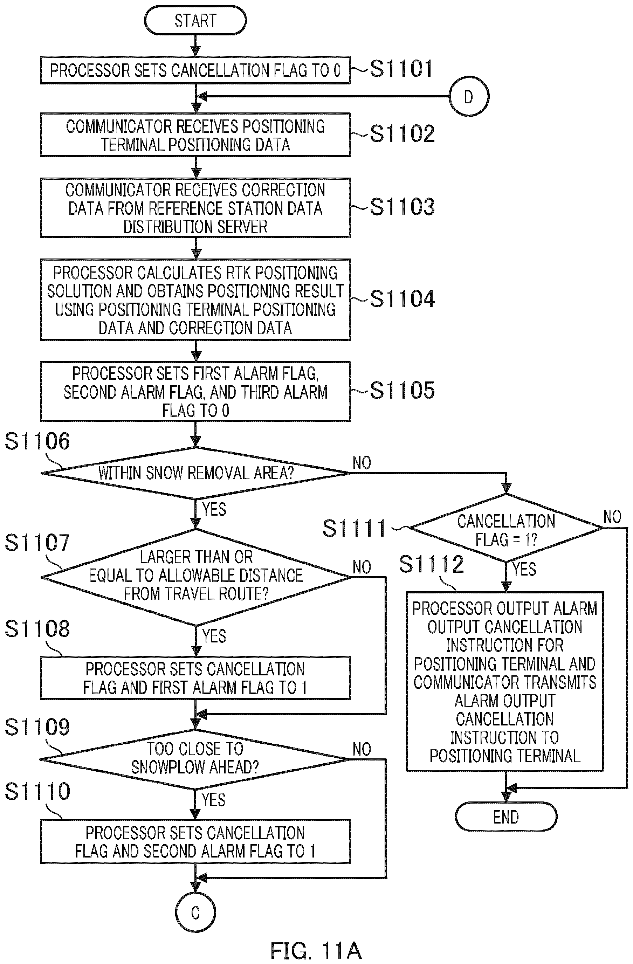

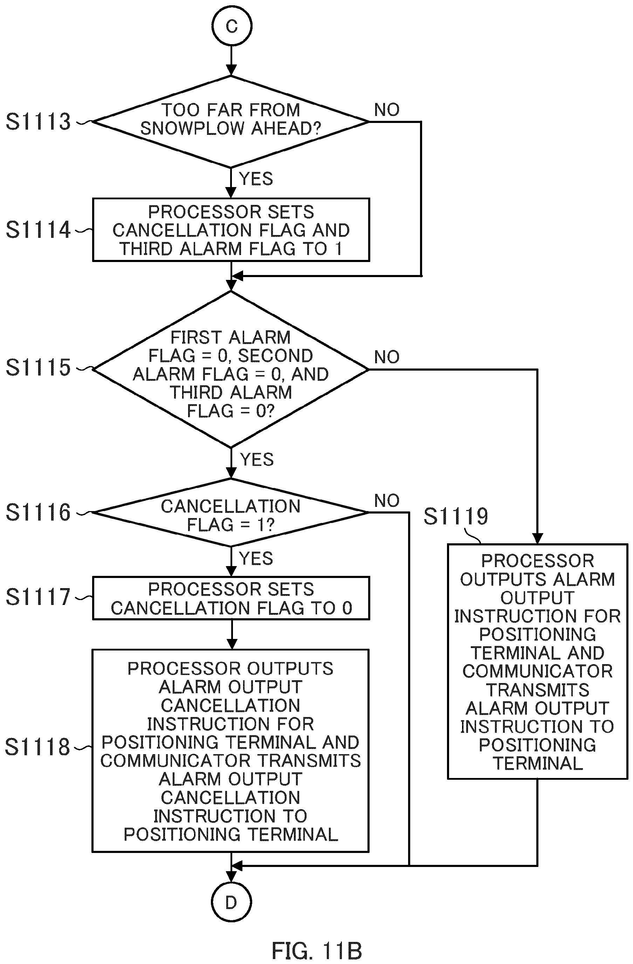

Next, examples of operation of alarm system 1' according to Embodiment 2 will be described with reference to FIGS. 10, 11A, and 11B.

### [Operation of Positioning Terminal]

FIG. 10 is a diagram illustrating an example of operation of positioning terminal 10' according to Embodiment 2.

In step S1001, GNSS receiver 104 receives a satellite signal transmitted from a GNSS satellite.

In step S1002, processor 101' generates positioning terminal positioning data on the basis of the satellite signal.

In step S1003, communicator 105' transmits the positioning terminal positioning data to host server 20'.

In step S1004, processor 101' or communicator 105' determines whether communicator 105' has received an alarm output instruction (e.g., within a certain period of time since the transmission of the positioning terminal positioning data).

When communicator 105' has received an alarm output instruction (e.g., within the certain period of time since the transmission of the positioning terminal positioning data) (YES in step S1004), alarmer 103 outputs, in step S1005, an alarm in a style specified (determined) by host server 20'. Next, the flow proceeds to step S1006.

When communicator 105' has not received an alarm output instruction (e.g., within the certain period of time since the transmission of the positioning terminal positioning data) (NO in step S1004), on the other hand, the flow proceeds to step S1006.

In step S1006, processor 101' or communicator 105' determines whether communicator 105' has received an alarm output cancellation instruction (e.g., within a certain period of time since the transmission of the positioning terminal positioning data).

When communicator 105' has received an alarm output cancellation instruction (e.g., within the certain period of time since the transmission of the positioning terminal positioning data) (YES in step S1006), alarmer 103 cancels, in step S1007, the output of the alarm. The cancellation of the output of the alarm may be manually performed by the worker. The flow then ends.

When communicator 105' has not received an alarm output cancellation instruction (e.g., within the certain period of time since the transmission of the positioning terminal positioning data) (NO in step S1006), on the other hand, the flow ends.

The process in FIG. 10 is then repeated.

### [Operation of Host Server]

A process relating to presetting of host server 20' is the same as the process already described with reference to FIG. 5, and description thereof is omitted here.

FIGS. 11A and 11B are diagrams illustrating an example of the operation of host server 20' according to Embodiment 2. FIGS. 11A and 11B are performed for each snowplow 50.

In step S1101, processor 201' sets a cancellation flag for determining whether to cancel output of an alarm to 0.

In step S1102, communicator 203' receives positioning terminal positioning data transmitted from positioning terminal 10'.

In step S1103, communicator 203' receives correction data transmitted from reference station data distribution server 30'.

In step S1104, processor 201' performs RTK processing using the positioning terminal positioning data and the correction data to calculate an RTK positioning solution and obtain a positioning result.

In step S1105, processor 201' sets a first alarm flag, a second alarm flag, and a third alarm flag to 0. The first alarm flag is a flag for determining whether snowplow 50 is deviating from the travel route by the allowable distance or longer in the snow removal area. The second alarm flag is a flag for determining whether a distance between snowplow 50 and another snowplow 50 ahead has become smaller than or equal to a lower limit value of the allowable distance range in the snow removal area. The third alarm flag is a flag for determining whether a distance between snowplow 50 and another snowplow 50 ahead has become larger than or equal to an upper limit value of the allowable distance range in the snow removal area.

In step S1106, processor 201' determines whether positioning terminal 10'is located within the snow removal area on the basis of the set snow removal area and the obtained positioning result (the position of positioning terminal 10').

When determining that positioning terminal 10' is not located within the snow removal area (NO in step S1106), processor 201' determines, in step S1111, whether the cancellation flag is 1.

When the cancellation flag is 1 (YES in step S1111), processor 201' outputs, in step S1112, an alarm output cancellation instruction for positioning terminal 10', and communicator 203' transmits the alarm output cancellation instruction to positioning terminal 10'. The flow then ends.

When the cancellation flag is 0 (NO in step S 1111), on the other hand, the flow ends.

When determining in step S1106 that positioning terminal 10' is located within the snow removal area (YES in step S1106), processor 201' determines, in step S1107, whether snowplow 50 is deviating from the travel route by the allowable distance or longer on the basis of the travel route of snowplow 50 and the obtained positioning result (the position of positioning terminal 10').

When determining that snowplow 50 is deviating from the travel route by the allowable distance or longer (YES in step S1107), processor 201' sets, in step S1108, the cancellation flag and the first alarm flag to 1. The flow then proceeds to step S1109.

When processor 201' determines that snowplow 50 is not deviating from the travel route by the allowable distance or longer (NO in step S1107), on the other hand, the flow proceeds to step S1109.

In step S1109, processor 201' determines whether snowplow 50 and another snowplow 50 ahead are too close to each other. That is, processor 201' determines, on the basis of received positioning results (positions of positioning terminals 10' mounted on snowplow 50 and the other snowplow 50 ahead), whether a distance between snowplow 50 and the other snowplow 50 ahead is smaller than or equal to the lower limit value of the allowable distance range.

When determining that snowplow 50 and the other snowplow 50 ahead are too close to each other (YES in step S1109), processor 201' sets, in step S1110, the cancellation flag and the second alarm flag to 1. The flow then proceeds to step S1113.

When processor 201' determines that snowplow 50 and the other snowplow 50 ahead are not too close to each other (NO in step S1109), the flow proceeds to step S1113.

In step S1113, processor 201' determines whether snowplow 50 and the other snowplow 50 ahead are too far from each other. That is, processor 201' determines, on the basis of the received positioning results (the positions of positioning terminals 10' mounted on snowplow 50 and the other snowplow 50 ahead), whether the distance between snowplow 50 and the other snowplow 50 ahead is larger than or equal to the upper limit value of the allowable distance range.

When determining that snowplow 50 and the other snowplow 50 ahead are too far from each other (YES in step S1113), processor 201' sets, in step S1114, the cancellation flag and the third alarm flag to 1. The flow then proceeds to step S1115.

When processor 201' determines that snowplow 50 and the other snowplow 50 ahead are not too far from each other (NO in step S1113), on the other hand, the flow proceeds to step S1115.

In step S1115, processor 201' determines whether the first alarm flag, the second alarm flag, and the third alarm flag are all 0.

When the first alarm flag, the second alarm flag, and the third alarm flag are all 0 (YES in step S1115), processor 201' determines, in step S1116, whether the cancellation flag is 1.

When the cancellation flag is not 1 (NO in step S1116), the flow returns to step S1102.

When the cancellation flag is 1 (YES in step S1116), on the other hand, processor 201' sets, in step S1117, the cancellation flag to 0.

In step S1118, processor 201' outputs an alarm output cancellation instruction for positioning terminal 10, and communicator 203' transmits the alarm output cancellation instruction to positioning terminal 10'. The flow then returns to step S1102.

When at least one of the first alarm flag, the second alarm flag, and the third alarm flag is not 0 in step S1115 (NO in step S1115), processor 201' outputs, in step S1119, an alarm output instruction for positioning terminal 10', and communicator 203' transmits the alarm output instruction to positioning terminal 10'. As described above, the alarm output instruction output to positioning terminal 10' may include all alarm output instructions corresponding to the flag of 1 or include one of the alarm output instructions corresponding to the flag of 1. The flow then returns to step S1102.

### <Variations>

### [Variation 2-1]

In Embodiment 2, too, Variation 1-1 of Embodiment 1 may be applied.

### [Variation 2-2]

In Embodiment 2, too, Variation 1-2 of Embodiment 1 may be applied.

### [Variation 2-3]

In Embodiment 2, too, Variation 1-3 of Embodiment 1 may be applied.

### [Variation 2-4]

In Embodiment 2, too, Variation 1-4 of Embodiment 1 may be applied.

### [Variation 2-5]

In Embodiment 2, too, Variation 1-5 of Embodiment 1 may be applied.

### [Variation 2-6]

Although an example where host server 20' performs the processing in the present disclosure, such as the detection of an alarm event and an alarm cancellation event, has been described above, the present disclosure is not limited to this example. For example, representative positioning terminal 10' among the plurality of positioning terminals 10'may receive positioning terminal positioning data from individual positioning terminals 10' and perform the processing in the present disclosure instead of host server 20'.

### <Effects>

According to Embodiment 2, host server 20' or representative positioning terminal 10'determines, on the basis of the positions of positioning terminals 10' mounted on snowplows 50, whether a distance between positioning terminals 10' mounted on snowplows 50 traveling along adjacent travel routes is within an allowable distance range. When the distance is outside the allowable distance range (e.g., the distance is too small or too large), an alarm output instruction for causing the management terminal, which manages the travel of snowplows 50, to output an alarm is generated and transmitted to the management terminal, or positioning terminals 10' output an alarm. As a result, collision between snowplows 50 can be avoided, or efficiency of the operation can be increased by avoiding a delay in the entirety of the operation due to snowplows 50 becoming too far from each other. Alarms, therefore, can be given such that even workers with little experience can appropriately perform the operation.

In addition, according to Embodiment 2, since RTK processing for measuring the positions of positioning terminals 10' is performed not by positioning terminals 10' but by host server 20' or representative positioning terminal 10', a processing load of individual positioning terminals 10' can be reduced.

### (Embodiment 3)

Next, Embodiment 3 of the present disclosure will be described. Embodiment 3 relates to a determination of order (positional relationship) and travel routes of snowplows 50 according to positions of snowplows 50 at a time when, for example, snowplows 50 gather at a meeting place before snowplows 50 remove snow. In Embodiment 3, alarm system 1 or alarm system 1' may be used. Instead of setting in advance the order (positional relationship) and the travel routes of snowplows 50 in step S501 in FIG. 5, the order (positional relationship) and the travel routes of snowplows 50 are determined as follows, for example, and the operation described in the Embodiment 1 or 2, including the variations, may be performed.

FIG. 13 is a diagram illustrating the determination of the order (positional relationship) and the travel routes of the snowplows according to Embodiment 3. In Embodiment 3, host server 20 or 20' (processor 201 or 201') or representative positioning terminal 10 or 10' (processor 101 or 101') determines the order (positional relationship) and the travel routes of snowplows 50.

As illustrated in FIG. 13, it is assumed that five travel routes R1 to R5, which are parallel straight line segments, are set in advance and each of five snowplows 50A to 50E removes snow while traveling along a different one of five travel routes R1 to R5. In the following description, processor 201 may be replaced by processor 201', processor 101, or processor 101'.

Processor 201 calculates, on the basis of positioning results (positions) relating to positioning terminals 10 mounted on snowplows 50A to 50E and a straight line obtained by extending outermost travel route R5, shortest distances between positions of snowplows 50A to 50E (more specifically, corresponding positioning terminals 10) and the straight line. The distances may be expressed as perpendicular distances relative to a travel direction of snowplows 50A to 50E. Processor 201 determines the travel routes of snowplows 50A to 50E such that snowplows whose perpendicular distances are smaller travel along travel routes closer to the straight line.

In the example illustrated in FIG. 13, perpendicular distance DE of snowplow 50E < perpendicular distance DC of snowplow 50C < perpendicular distance DA of snowplow 50A < perpendicular distance DB of snowplow 50B < perpendicular distance DD of snowplow 50D. Processor 201, therefore, determines the travel route of snowplow 50E as travel route R5, the travel route of snowplow 50C as travel route R3, the travel route of snowplow 50A as travel route R1, the travel route of snowplow 50B as travel route R2, and the travel route of snowplow 50D as travel route R4.

When the perpendicular distances of the plurality of snowplows 50 are the same, processor 201 may randomly select travel routes of the plurality of snowplows 50 from travel routes corresponding to the perpendicular distances.

### <Variations>

### [Variation 3-1]

Although an example where travel routes are automatically determined for all snowplows 50 has been described, the present disclosure is not limited to this example. For example, travel routes may be determined in advance for a subset of snowplows 50, instead. In the example illustrated in FIG. 13, for example, the travel route of snowplow 50C may be determined in advance as travel route R1 regardless of the perpendicular distance of snowplow 50C.

### [Variation 3-2]

Although the travel route of each snowplow 50 is determined on the basis of the distance between the outermost one of the plurality of travel routes and the position of positioning terminal 10 mounted on snowplow 50 in the above description, the travel route that serves as a reference for distance may be another route, instead. For example, the travel route of each snowplow 50 may be determined on the basis of a perpendicular distance between any travel route that serves as a reference and the position of positioning terminal 10 mounted on snowplow 50. Alternatively, a perpendicular distance between each travel route and each snowplow 50 may be calculated, and the travel route of each snowplow 50 may be determined on the basis of the distance (e.g., in ascending order of distance).

### [Variation 3-3]

The shape of the front of each of the plurality of snowplows 50 is the same in the above description. This is in order to equalize the efficiency of snow removal regardless of the order of traveling of snowplows 50, since the order of traveling is not confirmed until the travel routes are determined. The shape of the front of each snowplow 50 may be changed in accordance with the determined order of traveling. In doing so, snow can be efficiently removed in accordance with the determined order of traveling. In addition, when there are sufficient intervals between snowplows 50, order in which snowplows 50 start to travel from snow removal start points may be adjusted. For example, in order to efficiently guide snow out of the snow removal area, at least snowplow 50 traveling along outermost travel route R4 or snowplow 50 traveling along outermost travel route R5 desirably travels last.

### <Effects>

According to Embodiment 3, snowplows 50 on which positioning terminals 10 or 10' are mounted can be efficiently set on the travel routes in accordance with the positions of snowplows 50.

### (Other Variations of Embodiments)

Although the positions of positioning terminals 10 or 10' are calculated through RTK processing in the above-described embodiments, the positions may be calculated using one of other positioning methods. The other positioning methods include, for example, a conventional GPS method, in which the positions of positioning terminals 10 or 10' are calculated only on the basis of signals from a satellite, a differential GPS method, in which correction data different from one obtained through RTK processing is used, and a method in which signals from a beacon provided nearby are used without using signals from a satellite. In addition, the positions of positioning terminals 10 or 10' may be calculated using a plurality of positioning methods, instead of using a single positioning method. For example, a method for calculating the positions of positioning terminals 10 or 10' may be switched in an environment where signals from a satellite can be stably received, such as outdoors, and an environment where quality of signals from a satellite tends to deteriorate, such as indoors. That is, it is only required in the above-described embodiments that the positions of positioning terminals 10 or 10' be calculated using a positioning method, and any positioning method may be used. RTK processing, however, can calculate more accurate positions than other positioning methods in an environment where high-quality signals can be received from a satellite. It is therefore preferable to use RTK processing in an environment where there are few objects that block signals from a satellite and errors in the positions tend to lead to an accident, such as an outdoor snow removal site.

Although positioning terminals 10 or 10' output alarms in the above-described embodiments, another terminal may output alarms, instead. In the above-described embodiments, alarms are output in order to monitor or control mobile objects in accordance with certain alarm events. From this perspective, a management terminal that manages the travel of the mobile objects desirably outputs alarms. The management terminal may be integrated with positioning terminals 10 or provided at a management center that manages the whole system.

In the above-described embodiments, an example of a snow removal operation has been described. The idea of the above-described embodiments, however, can be applied to an operation for removing another foreign object. For example, the present disclosure may be applied to removal of a foreign object in an area where vehicles can travel, such as removal of puddles or removal of volcanic ash.

### (Summary of Embodiments)

An information processing apparatus according to an embodiment of the present disclosure is an information processing apparatus (representative positioning terminal 10 or 10' or host server 20 or 20') in a system where each of a plurality of mobile objects (snowplows 50) travel along a corresponding one of a plurality of substantially parallel travel routes (R1 to R5), the information processing apparatus including a processor (processor 101, 101', 201, or 201') that determines, based on positions of terminals (positioning terminals 10 or 10') mounted on the mobile objects, whether a distance between terminals mounted on mobile objects traveling along adjacent travel routes is within a certain distance range (allowable distance range) and that, when determining that the distance is outside the certain distance range, generates an alarm output signal (alarm output instruction) for outputting an alarm and a communicator (communicator 105, 105', 203, or 203') that transmits the alarm output signal to a management terminal (one integrated with positioning terminal 10, one provided at a management center, etc.) that manages the travel of the mobile objects.

With the above configuration, whether a distance between terminals mounted on mobile objects traveling along adjacent travel routes is within the certain distance range is determined on the basis of positions of terminals mounted on mobile objects. When the distance is outside the certain distance range (e.g., when the distance is too small or too large), an alarm output signal for causing the management terminal to output an alarm is generated and transmitted to the management terminal. As a result, collision between the mobile objects can be avoided, or efficiency of an operation can be increased by avoiding a delay in the entirety of the operation due to the mobile objects becoming too far from each other. Alarms, therefore, can be given such that even workers with little experience can appropriately perform the operation.

In the information processing apparatus, the distance between the terminals mounted on the mobile objects traveling along the adjacent routes is a distance between points obtained by projecting positions of the positioning terminals mounted on the mobile objects onto the travel routes.

With the above configuration, collision between the mobile objects can be avoided, or efficiency of an operation can be increased by avoiding a delay in the entirety of the operation due to the mobile objects becoming too far from each other.

In the information processing apparatus, when the distance between the terminals mounted on the mobile objects traveling along the adjacent routes falls within the certain distance range, the processor generates an alarm output cancellation signal (alarm output cancellation instruction) for causing the management terminal to cancel the output of the alarm. The communicator transmits the alarm output cancellation signal to the management terminal.

With the above configuration, since an alarm output cancellation signal indicating that the distance between the terminals has fallen within the certain distance range again is provided for the management terminal, for example, persons who are driving the mobile objects on which the terminals are mounted can recognize that no problem has occurred.

In the information processing apparatus, each of the plurality of mobile objects is prohibited from overtaking another mobile object traveling along an adjacent route.

With the above configuration, since the plurality of mobile objects move in determined order, for example, the mobile objects can achieve an efficient operation.

In the information processing apparatus, the plurality of travel routes is provided in a certain foreign object removal area (snow removal area). Each of the plurality of mobile objects has a shape with which a mobile object traveling at a more rearward position guides a foreign object existing in a travel direction more outward in the foreign object removal area.

With the above configuration, a foreign object plowed by a leading mobile object can be guided out of the foreign object removal area by a following mobile object.

In the information processing apparatus, when determining, as a result of movement of one of the mobile objects, that the mobile object is located outside the foreign object removal area after determining that the mobile object is located within the foreign object removal area, the processor generates an alarm output cancellation signal (alarm output cancellation instruction) for causing the management terminal to cancel the output of the alarm. The communicator transmits the alarm output cancellation signal to the management terminal.

With the above configuration, since an alarm output cancellation signal indicating that an operation in a foreign object removal area has ended is provided for the management terminal, for example, persons who are driving mobile objects on which terminals are mounted can recognize that it is likely that the operation has ended.

In the information processing apparatus, when a shortest distance between the position of the terminal mounted on one of the mobile objects and the travel route assigned to the mobile object becomes larger than or equal to a threshold, the processor generates the alarm output signal.

With the above configuration, since an alarm output signal is provided for the management terminal when a terminal deviates from a travel route by a threshold or longer, a possibility that occurrence of an incomplete operation due to the deviation from the travel route can be suppressed increases.

In the information processing apparatus, when the shortest distance becomes smaller than the threshold, the processor generates an alarm output cancellation signal (alarm output cancellation instruction) for causing the management terminal to cancel the output of the alarm. The communicator transmits the alarm output cancellation signal to the management terminal.

With the above configuration, since an alarm output cancellation signal indicating that a terminal that deviated from a travel route by the threshold or longer has returned within the threshold is provided for the terminal, for example, a person who is driving a mobile object on which the terminal is mounted can recognize that no problem has occurred.

In the information processing apparatus, the processor determines the travel route of each of the plurality of mobile objects based on a distance between the terminal mounted on the mobile object and at least one of the plurality of travel routes.

With the above configuration, mobile objects on which a plurality of terminals is mounted can be efficiently set on travel routes in accordance with positions of the mobile objects.

In the information processing apparatus (representative positioning terminal 10 or host server 20), the communicator (communicator 105 or 203) receives, from the terminals (positioning terminals 10), the positions of the terminals determined based on RTK (real-time kinematic) processing.

With the above configuration, since accurate positions of terminals can be obtained, the above determination can be made more accurately.

In the information processing apparatus (representative positioning terminal 10' or host server 20'), the processor (processor 101' or 201') determines the positions of the terminals (positioning terminals 10') based on RTK processing.

With the above configuration, since accurate positions of terminals can be obtained, the above determination can be made more accurately.

A terminal according to another embodiment of the present disclosure is a terminal (positioning terminal 10 or 10') mounted on each of a plurality of mobile objects (snowplows 50) in a system where the mobile object travels along a corresponding one of a plurality of substantially parallel travel routes (R1 to R5), the terminal including a processor (processor (101 or 101') that determines a position of the terminal and an alarmer (103) that outputs an alarm when a distance between the position of the terminal and a position of another terminal mounted on another mobile object traveling along a travel route adjacent to the travel route along which the mobile object on which the terminal is mounted travels is outside a certain distance range (allowable distance range).

With the above configuration, whether a distance between terminals mounted on mobile objects traveling along adjacent travel routes is within the certain distance range is determined on the basis of positions of terminals mounted on mobile objects. When the distance is outside the certain distance range (e.g., when the distance is too small or too large), the terminals output an alarm. As a result, collision between the mobile objects can be avoided, or efficiency of an operation can be increased by avoiding a delay in the entirety of the operation due to the mobile objects becoming too far from each other. Alarms, therefore, can be given such that even workers with little experience can appropriately perform the operation.

The terminal further includes a communicator (105 or 105') that transmits the position of the terminal to an information processing apparatus (representative positioning terminal 10 or 10' or host server 20 or 20') and that, when the information processing apparatus determines that the distance between the position of the terminal and the position of the other terminal is outside the certain distance range (allowable distance range), receives, from the information processing apparatus, an alarm output signal (alarm output instruction) for outputting the alarm, the alarmer outputs an alarm in accordance with the alarm output signal.

With the above configuration, since the information processing apparatus makes the determination, a processing load of the terminal can be reduced.

An information processing method according to another example of the present disclosure is an information processing method used by an information processing apparatus (representative positioning terminal 10 or 10' or host server 20 or 20') in a system where each of a plurality of mobile objects (snowplows 50) travels along a corresponding one of substantially parallel travel routes (R1 to R5), the information processing method including determining, based on positions of terminals (positioning terminal 10 or 10') mounted on the mobile objects, whether a distance between terminals mounted on mobile objects traveling along adjacent travel routes is within a certain distance range, generating, when determining that the distance is outside the certain distance range, an alarm output signal (alarm output instruction) for outputting an alarm, and transmitting the alarm output signal to a management terminal (one integrated with positioning terminal 10, one provided at a management center, etc.) that manages the travel of the mobile objects.

With the above configuration, whether a distance between terminals mounted on mobile objects traveling along adjacent travel routes is within the certain distance range is determined on the basis of positions of terminals mounted on mobile objects. When the distance is outside the certain distance range (e.g., when the distance is too small or too large), an alarm output signal for causing the management terminal to output an alarm is generated and transmitted to the management terminal. As a result, collision between the mobile objects can be avoided, or efficiency of an operation can be increased by avoiding a delay in the entirety of the operation due to the mobile objects becoming too far from each other. Alarms, therefore, can be given such that even workers with little experience can appropriately perform the operation.

An alarm method according to another embodiment of the present disclosure is an alarm method used by a terminal (positioning terminal 10 or 10') mounted on each of a plurality of mobile objects (snowplows 50) in a system where the mobile object travels along a corresponding one of a plurality of substantially parallel travel routes (R1 to R5), the alarm method including determining a position of the terminal and outputting an alarm when a distance between the position of the terminal and a position of another terminal mounted on another mobile object traveling along a travel route adjacent to the travel route along which the mobile object on which the terminal is mounted travels is outside a certain distance range (allowable distance range).

With the above configuration, whether a distance between terminals mounted on mobile objects traveling along adjacent travel routes is within the certain distance range is determined on the basis of positions of terminals mounted on mobile objects. When the distance is outside the certain distance range (e.g., when the distance is too small or too large), the terminals output an alarm. As a result, collision between the mobile objects can be avoided, or efficiency of an operation can be increased by avoiding a delay in the entirety of the operation due to the mobile objects becoming too far from each other. Alarms, therefore, can be given such that even workers with little experience can appropriately perform the operation.

An alarm system according to another embodiment of the present disclosure is an alarm system (alarm system 1 or 1') including a first terminal (positioning terminal 10 or 10') mounted on a first mobile object (snowplow 50), a second terminal (positioning terminal 10 or 10') mounted on a second mobile object (snowplow 50) that travels along a travel route (R1 to R1) substantially parallel to and adjacent to a travel route (R1 to R5) along which the first mobile object travels, and a management terminal (one integrated with positioning terminals 10, one provided at a management center, etc.) that manages the travel of the first mobile object and the second mobile object. The alarm system determines, based on positions of the first terminal and the second terminal, whether a distance between the first terminal and the second terminal is within a certain distance range (allowable distance range) and, when determining that the distance is outside the certain distance range, generates an alarm output signal (alarm output instruction) for outputting an alarm and transmits the alarm output signal to the management terminal. The management terminal outputs the alarm in accordance with the alarm output signal.

With the above configuration, whether the distance between the first terminal mounted on the first mobile object and the second terminal mounted on the second mobile obj ect traveling along the travel route adj acent to the travel route of the first terminal is within the certain distance range is determined on the basis of the positions of the first and second terminals. When the distance is outside the certain distance range (e.g., when the distance is too small or too large), an alarm output signal for causing the management terminal to output an alarm is generated and transmitted to the management terminal. As a result, collision between the first and second mobile objects can be avoided, or efficiency of an operation can be increased by avoiding a delay in the entirety of the operation due to the first and second mobile objects becoming too far from each other. Alarms, therefore, can be given such that even workers with little experience can appropriately perform the operation.

An information processing apparatus (representative positioning terminal 10 or 10' or host server 20 or 20') according to another embodiment of the present disclosure includes a processor (processor 101, 101', 201, or 201') that determines, based on a position of a terminal (positioning terminal 10 or 10') mounted on a mobile object (snowplow 50), whether the mobile object is located within a snow removal area and that, when determining that the mobile object is located within the snow removal area, generates an alarm output signal (alarm output instruction) for causing the terminal to output an alarm in accordance with a positional relationship between the position of the terminal and a target (a travel route along which snowplow 50 travels or another snowplow 50 adjacent to snowplow 50 and traveling ahead of snowplow 50) within the snow removal target and a communicator (communicator 105, 105', 203, or 203') that transmits the alarm output signal to the terminal.

With the above configuration, whether a mobile object is located within a snow removal area is determined on the basis of a position of a terminal mounted on the mobile object. When the mobile object is located within the snow removal area, an alarm output signal for causing the terminal to output an alarm is generated in accordance with the positional relationship between the position of the terminal and the target within the snow removal area and transmitted to the terminal. As a result, alarms can be appropriately given to a person (worker) who is driving the mobile object, for example, in accordance with the positional relationship between, for example, the target such as the travel route along which the mobile object travels or the other mobile object adjacent to the mobile object and traveling ahead of the mobile object and the terminal. Alarms, therefore, can be given such that even workers with little experience can appropriately perform the operation.

In the information processing apparatus, the target includes the travel route along which the mobile object travels, and when a shortest distance between the position of the terminal and the travel route becomes larger than or equal to a threshold (allowable distance), the processor generates the alarm output signal.

With the above configuration, since an alarm output signal is provided for the terminal when the terminal deviates from the travel route by the threshold or longer, a possibility that occurrence of incomplete snow removal due to the deviation from the travel route can be suppressed increases.

In the information processing apparatus, when the shortest distance becomes smaller than the threshold, the processor generates an alarm output cancellation signal (alarm output cancellation instruction) for causing the terminal to cancel the output of the alarm. The communicator transmits the alarm output cancellation signal to the terminal.

With the above configuration, since an alarm output cancellation signal indicating that a terminal that deviated from a travel route by the threshold or longer has returned within the threshold is provided for the terminal, for example, a person who is driving a mobile object on which the terminal is mounted can recognize that no problem has occurred.

In the information processing apparatus, the target includes another mobile object (snowplow 50 ahead) adjacent to the mobile object and traveling ahead of the mobile object, and when a distance between the position of the terminal and a position of another terminal mounted on the other mobile object is outside a certain distance range (allowable distance range), the processor generates the alarm output signal.

With the above configuration, since an alarm output signal is provided for the terminals when the distance between the position of the terminal and the position of the other terminal is outside the certain distance range (the mobile object and the other mobile object are too close to or too far from each other), a possibility that occurrence of collision between the mobile object and the other mobile object and a delay in an operation performed by the mobile objects can be suppressed increases.

In the information processing apparatus, when the distance falls within the certain distance range, the processor generates an alarm output cancellation signal (alarm output cancellation instruction) for causing the terminals to cancel the output of the alarm. The communicator transmits the alarm output cancellation signal to the terminals.

With the above configuration, since an alarm output cancellation signal indicating that the distance between the position of the terminal and the position of the other terminal has returned within the certain distance range is provided for the terminals, for example, persons who are driving the mobile objects on which the terminals are mounted can recognize that no problem has occurred.

In the information processing apparatus, the target includes the travel route along which the mobile object travels and another mobile object adjacent to the mobile object and traveling ahead of the mobile object, and when a distance between points obtained by projecting a position of the terminal and a position of another terminal mounted on the other mobile object onto the travel routes is outside the certain distance range, the processor generates the alarm output signal.

With the above configuration, since an alarm output signal is provided for the terminals when the (projected) distance between the points obtained by projecting the position of the terminal and the position of the other terminal onto the travel routes is outside the certain distance range (the mobile object and the other mobile object are too close to or too far from each other), a possibility that occurrence of collision between the mobile object and the other mobile object and a delay in an operation performed by the mobile objects can be suppressed increases.

In the information processing apparatus, when the distance falls within the certain distance range, the processor generates an alarm output cancellation signal (alarm output cancellation instruction) for causing the terminal to cancel the output of the alarm. The communicator transmits the alarm output cancellation signal to the terminal.

With the above configuration, since an alarm output cancellation signal indicating that the (projected) distance has returned within the certain distance range is provided for the terminals, for example, the persons who are driving the mobile objects on which the terminals are mounted can recognize that a problem has not occurred.

In the information processing apparatus, when determining, as a result of movement of the mobile object, that the mobile object is located outside the snow removal area after determining that the mobile object is located within the snow removal area, the processor generates an alarm output cancellation signal (alarm output cancellation instruction) for causing the terminal to cancel the output of the alarm. The communicator transmits the alarm output cancellation signal to the terminal.

With the above configuration, since an alarm output cancellation signal indicating that a snow removal operation in the snow removal area has ended is provided for the terminal, for example, the person who is driving the mobile object on which the terminal is mounted can recognize that it is likely that the snow removal operation has ended.

In the information processing apparatus, the processor determines the travel route of each of the plurality of mobile objects (snowplows 50) including the mobile object based on a shortest distance between each of a plurality of terminals (positioning terminals 10 or 10'), including the terminal, mounted on the plurality of mobile objects and an outermost one of a plurality of parallel travel routes along which the plurality of mobile objects travels.

With the above configuration, the mobile objects on which the plurality of terminals is mounted can be efficiently set on the travel routes in accordance with positions of the mobile objects.

In the information processing apparatus (representative positioning terminal 10 or host server 20), the communicator (communicator 105 or 203) receives, from the terminals (positioning terminals 10), the positions of the terminals determined based on RTK (real-time kinematic) processing.

With the above configuration, since accurate positions of the terminals can be obtained, the above determination can be made more accurately.

In the information processing apparatus (representative positioning terminal 10' or host server 20'), the processor (processor 101' or 201') determines the positions of the terminals (positioning terminals 10') based on RTK processing.

With the above configuration, since accurate positions of the terminals can be obtained, the above determination can be made more accurately.

A terminal (positioning terminal 10 or 10') according to another embodiment of the present disclosure is mounted on a mobile object (snowplow 50) and includes a processor (processor 101 or 101') that determines a position of the terminal, a communicator (communicator 105 or 105') that transmits the position of the terminal to the information processing apparatus (representative positioning terminal 10 or 10' or host server 20 or 20') and that, when the mobile object is located within a snow removal area, receives, from the information processing apparatus, an alarm output signal (alarm output instruction) for causing the terminal to output an alarm, and an alarmer (alarm 103) that outputs the alarm in accordance with the alarm output signal. The alarm output signal is generated in accordance with a positional relationship between the position of the terminal and a target (a travel route along which snowplow 50 travels or another snowplow 50 adjacent to snowplow 50 and traveling ahead of snowplow 50) within the snow removal area.

With the above configuration, whether the mobile object is located within the snow removal area is determined on the basis of the position of the terminal mounted on the mobile object. When the mobile object is located within the snow removal area, an alarm output signal for causing the terminal to output an alarm is generated in accordance with the positional relationship between the position of the terminal and the target within the snow removal area and transmitted to the terminal. As a result, alarms can be appropriately given to a person (worker) who is driving the mobile object, for example, in accordance with the positional relationship between, for example, the target such as the travel route along which the mobile object travels or the other mobile object adjacent to the mobile object and traveling ahead of the mobile object and the terminal. Alarms, therefore, can be given such that even workers with little experience can appropriately perform the operation.

In the terminal (positioning terminal 10), the processor (processor 101) determines the position of the terminal based on RTK processing.

With the above configuration, since an accurate position of the terminal can be obtained, the above determination can be made more accurately.

An information processing method according to another embodiment of the present disclosure is used by an information processing apparatus (representative positioning terminal 10 or 10' or host server 20 or 20'), the information processing method including determining, based on a position of a terminal (positioning terminal 10 or 10') mounted on a mobile object (snowplow 50), whether the mobile object is located within a snow removal area, generating, when determining that the mobile object is located within the snow removal area, an alarm output signal (alarm output instruction) for causing the terminal to output an alarm in accordance with a positional relationship between the position of the terminal and a target (a travel route along which snowplow 50 travels or another snowplow 50 adjacent to snowplow 50 and traveling ahead of snowplow 50) within the snow removal area, and transmitting the alarm output signal to the terminal.

With the above configuration, whether the mobile object is located within the snow removal area is determined on the basis of the position of the terminal mounted on the mobile object. When the mobile object is located within the snow removal area, an alarm output signal for causing the terminal to output an alarm is generated in accordance with the positional relationship between the position of the terminal and the target within the snow removal area and transmitted to the terminal. As a result, alarms can be appropriately given to a person (worker) who is driving the mobile object, for example, in accordance with the positional relationship between, for example, the travel route along which the mobile object travels or the other mobile object adjacent to the mobile object and traveling ahead of the mobile object and the terminal. Alarms, therefore, can be given such that even workers with little experience can appropriately perform the operation.

An alarm method according to another embodiment of the present disclosure is used by a terminal (positioning terminal 10 or 10') mounted on each of a plurality of mobile objects (snowplows 50), the alarm method including determining a position of the terminal, transmitting the position of the terminal to an information processing apparatus (representative positioning terminal 10 or 10' or host server 20 or 20'), receiving, when the mobile object is located within a snow removal area, an alarm output signal (alarm output instruction) for causing the terminal to output an alarm from the information processing apparatus, and outputting the alarm in accordance with the alarm output signal. The alarm output signal is generated in accordance with a positional relationship between the position of the terminal and a target (a travel route along which snowplow 50 travels or another snowplow 50 adj acent to snowplow 50 and traveling ahead of snowplow 50) within the snow removal area.

With the above configuration, whether the mobile object is located within the snow removal area is determined on the basis of the position of the terminal mounted on the mobile object. When the mobile object is located within the snow removal area, an alarm output signal for causing the terminal to output an alarm is generated in accordance with the positional relationship between the position of the terminal and the target within the snow removal area and transmitted to the terminal. As a result, alarms can be appropriately given to a person (worker) who is driving the mobile object, for example, in accordance with the positional relationship between, for example, the travel route along which the mobile object travels or the other mobile object adjacent to the mobile object and traveling ahead of the mobile object and the terminal. Alarms, therefore, can be given such that even workers with little experience can appropriately perform the operation.

An alarm system (alarm system 1 or 1') according to another embodiment of the present disclosure includes an information processing apparatus (representative positioning terminal 10 or 10' or host server 20 or 20'), a first terminal (positioning terminal 10 or 10') mounted on a first mobile object (snowplow 50), and a second terminal (positioning terminal 10 or 10') mounted on a second mobile object (snowplow 50) adjacent to the first mobile object and traveling ahead of the first mobile object. The information processing apparatus determines, based on a position of the first terminal, whether the first mobile object is located within the snow removal target, generates, when determining that the first mobile object is located within the snow removal target and a distance between the position of the first terminal and a position of the second terminal is outside a certain distance range (allowable distance range), an alarm output signal (alarm output instruction) for causing the first terminal to output an alarm, and transmits the alarm output signal to the first terminal. The first terminal receives the alarm output signal from the information processing apparatus and outputs the alarm in accordance with the alarm output signal.

With the above configuration, whether the first mobile object is located within the snow removal area is determined on the basis of the position of the first terminal mounted on the first mobile object. When the first mobile object is located within the snow removal area, an alarm output signal for causing the first terminal to output an alarm is generated in accordance with the positional relationship between the position of the first terminal and the target (another mobile object adjacent to the mobile object and traveling ahead of the mobile object) within the snow removal area and transmitted to the first terminal. As a result, the first mobile object can appropriately give alarms to a person (worker) who is driving the first mobile object, for example, in accordance with the positional relationship between, for example, the target such as the second mobile object adjacent to the first mobile object and traveling ahead of the first mobile object and the first terminal. Alarms, therefore, can be given such that even workers with little experience can appropriately perform the operation. In addition, with the above configuration, since an alarm output signal is provided for the terminal when the distance between the position of the first terminal and the position of the second terminal is outside the certain distance range (the first mobile object and the second mobile object are too close to or far from each other), a possibility that occurrence of collision between the first mobile object and the second mobile object and a delay in an operation performed by the first mobile object can be suppressed increases.

Further, any component termed with a suffix, such as "-er," "-or," or "-ar" in the present disclosure may be replaced with another term such as "circuit (circuitry)," "assembly," "device," "unit," or "module."

Although the embodiments have been described above with reference to the accompanying drawings, the present disclosure is not limited to such examples. It is obvious that a person skilled in the art can arrive at various variations and modifications within the scope described in the claims. It is understood that such variations and modifications also belong to the technical scope of the present disclosure as a matter of fact. Further, components in the embodiments described above may be arbitrarily combined without departing from the spirit of the present disclosure.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, an FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

The entire contents disclosed in the specification, the drawings, and the abstract contained in Japanese Patent Application No. 2021-209645 filed on December 23, 2021 are hereby incorporated herein by reference.

### Industrial Applicability

An embodiment of the present disclosure is effective in an alarm technique for appropriately giving alarms.

### Reference Signs List

1, 1' alarm system
10, 10' positioning terminal
20, 20' host server
30, 30' reference station data distribution server
40 monitor device
50 snowplow
101, 101', 201, 201' processor
102, 102', 202 memory
103 alarmer
104 GNSS receiver
105, 105', 203, 203' communicator
106 outputter
107, 204 bus

## Claims

1. An information processing apparatus in a system where each of a plurality of mobile objects travels along a corresponding one of a plurality of substantially parallel travel routes, the information processing apparatus comprising:
a processor that determines, based on positions of terminals mounted on the mobile objects, whether a distance between terminals mounted on mobile objects traveling along adjacent travel routes is within a certain distance range and that, when determining that the distance is outside the certain distance range, generates an alarm output signal for outputting an alarm; and
a communicator that transmits the alarm output signal to a management terminal that manages travel of the mobile objects.

2. The information processing apparatus according to claim 1,
wherein the distance between the terminals mounted on the mobile objects traveling along the adjacent routes is a distance between points obtained by projecting positions of the terminals mounted on the mobile objects onto the travel routes.

3. The information processing apparatus according to claim 1,
wherein, when the distance between the terminals mounted on the mobile objects traveling along the adjacent routes falls within the certain distance range, the processor generates an alarm output cancellation signal for causing the management terminal to cancel the output of the alarm, and
wherein the communicator transmits the alarm output cancellation signal to the management terminal.

4. The information processing apparatus according to claim 1,
wherein each of the plurality of mobile objects is prohibited from overtaking another mobile object traveling along an adjacent route.

5. The information processing apparatus according to claim 4,
wherein the plurality of travel routes is provided in a certain foreign object removal area, and
wherein each of the plurality of mobile objects has a shape with which a mobile object traveling at a more rearward position guides a foreign object existing in a travel direction more outward in the foreign object removal area.

6. The information processing apparatus according to claim 5,
wherein, when determining, as a result of movement of at least one of the mobile objects, that the mobile object is located outside the foreign object removal area after determining that the mobile object is located within the foreign object removal area, the processor generates an alarm output cancellation signal for causing the management terminal to cancel the output of the alarm, and
wherein the communicator transmits the alarm output cancellation signal to the management terminal.

7. The information processing apparatus according to claim 1,
wherein, when a shortest distance between the position of the terminal mounted on at least one of the mobile objects and the travel route assigned to the mobile object becomes larger than or equal to a threshold, the processor generates the alarm output signal.

8. The information processing apparatus according to claim 7,
wherein, when the shortest distance becomes smaller than the threshold, the processor generates an alarm output cancellation signal for causing the management terminal to cancel the output of the alarm, and
wherein the communicator transmits the alarm output cancellation signal to the management terminal.

9. The information processing apparatus according to claim 1,
wherein the processor determines the travel route of each of the plurality of mobile objects based on a distance between the terminal mounted on the mobile object and at least one of the plurality of travel routes.

10. The information processing apparatus according to claim 1,
wherein the communicator receives, from the terminals, the positions of the terminals determined based on RTK (real-time kinematic) processing.

11. The information processing apparatus according to claim 1,
wherein the processor determines the positions of the terminals based on RTK processing.

12. A terminal mounted on each of a plurality of mobile objects in a system where the mobile object travels along a corresponding one of a plurality of substantially parallel travel routes, the terminal comprising:
a processor that determines a position of the terminal; and
an alarmer that outputs an alarm when a distance between the position of the terminal and a position of another terminal mounted on another mobile object traveling along a travel route adjacent to the travel route along which the mobile object on which the terminal is mounted travels is outside a certain distance range.

13. The terminal according to claim 12, further comprising:
a communicator that transmits the position of the terminal to an information processing apparatus and that, when the information processing apparatus determines that the distance between the position of the terminal and the position of the other terminal is outside the certain distance range, receives, from the information processing apparatus, an alarm output signal for outputting the alarm,
wherein the alarmer outputs an alarm in accordance with the alarm output signal.

14. An information processing method for an information processing apparatus in a system where each of a plurality of mobile objects travels along a corresponding one of substantially parallel travel routes, the information processing method comprising:
determining, by the information processing apparatus, based on positions of terminals mounted on the mobile objects, whether a distance between terminals mounted on mobile objects traveling along adjacent travel routes is within a certain distance range;
generating, by the information processing apparatus, when determining that the distance is outside the certain distance range, an alarm output signal for outputting an alarm; and
transmitting, by the information processing apparatus, the alarm output signal to a management terminal that manages the travel of the mobile objects.

15. An alarm method for a terminal mounted on each of a plurality of mobile objects in a system where the mobile object travels along a corresponding one of a plurality of substantially parallel travel routes, the alarm method comprising:
determining, by the terminal, a position of the terminal; and
outputting, by the terminal, an alarm when a distance between the position of the terminal and a position of another terminal mounted on another mobile obj ect traveling along a travel route adjacent to the travel route along which the mobile object on which the terminal is mounted travels is outside a certain distance range.

16. An alarm system comprising:
a first terminal mounted on a first mobile object;
a second terminal mounted on a second mobile object that travels along a travel route substantially parallel to and adjacent to a travel route along which the first mobile object travels; and
a management terminal that manages travel of the first mobile object and the second mobile object,
wherein the alarm system determines, based on positions of the first terminal and the second terminal, whether a distance between the first terminal and the second terminal is within a certain distance range and, when determining that the distance is outside the certain distance range, generates an alarm output signal for outputting an alarm and transmits the alarm output signal to the management terminal, and
wherein the management terminal outputs the alarm in accordance with the alarm output signal.
